# EUROPÄISCHE PATENTSCHRIFT

(11) **EP 0 956 172 B1**
(45) Veröffentlichungstag und Bekanntmachung des Hinweises auf die Patenterteilung: **09.05.2001**
(21) Anmeldenummer: 98900807.3
(22) Anmeldetag: 16.01.1998
(51) Int. Cl.: B22F 8/00, B30B 9/32

(54) **PRESSEINRICHTUNG ZUR VERDICHTUNG VON METALLTEILEN, INSBESONDERE VON SPÄNEN**
PRESSING DEVICE FOR COMPRESSING METAL PARTS, IN PARTICULAR CHIPS
DISPOSITIF DE PRESSAGE POUR COMPRIMER DES PARTIES METALLIQUES, NOTAMMENT DES COPEAUX

(30) Priorität: 20.01.1997 AT 7497
(43) Veröffentlichungstag der Anmeldung: 17.11.1999
(73) Patentinhaber: TCG UNITECH AG, 4560 Kirchdorf/Krems (AT)
(72) Erfinder: SCHWAIGER, Helmut, A-4560 Kirchdorf/Krems (AT)
(74) Vertreter: Secklehner, Günter, Dr.
(86) Internationale Anmeldenummer: AT9800005
(87) Internationale Veröffentlichungsnummer: WO9831493

(56) Entgegenhaltungen:
- EP-A- 0 130 277
- DE-U- 9 404 311
- FR-A- 2 274 369
- US-A- 5 391 069
- US-A- 5 524 534

## Beschreibung

Die Erfindung betrifft eine Preßeinrichtung, wie sie im Oberbegriff im Anspruch 1 beschrieben ist.

Aus der FR 2 274 369 A ist eine Vorrichtung zum Stangpressen von Profilen aus Rückständen oder Abfällen aus Aluminium oder Aluminiumlegierungen bekannt. Durch die umfangreiche Verwendung derartiger Profile fallen auch viele Rückstände an, für die eine Wiederverwertung durch das in der FR-A wiedergegebene Verfahren und einer Vorrichtung zur Durchführung des Verfahrens erreicht wird. Nach diesem Verfahren und der entsprechenden Vorrichtung werden die zerkleinerten Abfälle einer umfangreichen Vorbehandlung der Reinigung unterzogen und ein Vorformling zum Einsatz in einem Pressenzylinder hergestellt, wozu die Abfälle in eine käfigartige Umhüllung, bestehend aus zu den Abfällen identem Material, abgefüllt werden. Die so hergestellten Vorformlinge werden daraufhin auf die erforderliche Temperatur erhitzt und durch eine profilgebende Matrize gepreßt. Nachteilig dabei ist die sehr aufwendige Vorbehandlung zur Erzielung der angestrebten hohen Qualitätsanforderungen an die so hergestellten Profile.

Aus der US 5,391,069 A ist weiters eine Verdichtungsvorrichtung zur Herstellung kompakter Pellets aus Metallspänen mit einem hydraulisch angetriebenen Pressenstempel in einer Verdichtungskammer, in die eine Schneckenfördervorrichtung zur Zufuhr der Späne aus einem Behälter mündet, bekannt. Die Verdichtungskammer weist stirnseitig einen angetriebenen Flachschieber auf, mittels dem diese an ihrem dem Pressenstempel entgegengesetzten Stirnende wahlweise geschlossen oder geöffnet wird. Nachteilig bei dieser Vorrichtung ist, daß die Preßkraft zur Verdichtung der Späne einachsig und entgegen einer durch den Schieber gebildeten ebenen Reaktionsfläche erfolgt, wodurch die Homogenität im Preßling zwischen Kern- und Umfangsbereich stark unterschiedlich ist.

Aufgabe der Erfindung ist es, eine Preßeinrichtung zu schaffen, welche sich durch eine hohe Produktionsleistung und Produktqualität auszeichnet und bei der die fertigen Preßlinge einen geringen Feuchtigkeitsgehalt und einen homogenen Aufbau besitzen.

Die Aufgabe der Erfindung wird durch die im Kennzeichenteil des Anspruches 1 wiedergegebenen Merkmale gelöst. Der überraschende Vorteil dabei ist, daß eine Preßeinrichtung für die zu verdichtenden Späne geschaffen wird, bei der die Späne gegen eine Preßmatrize gepreßt und durch eine Matrizenöffnung hindurchgedrückt werden, deren Durchtrittsfläche geringer ist als eine Querschnittsfläche des Preßgehäuses, wodurch eine Entfeuchtung und eine homogene Plastifizierung der Späne zu einem kontinuierlichen Strang erreicht wird und ein einfacher Werkzeugaufbau erreicht wird und eine Werkzeugaufteilung zwischen weniger beanspruchten und hochbeanspruchten und damit einem hohen Verschleiß ausgesetzter Bauteile gegeben ist.

Gemäß der vorteilhaften Weiterbildung, wie in den Ansprüchen 2 und 3 beschrieben, wird eine hohe Verdichtung und damit ein homogener Aufbau des Materialstranges nach dem Verlassen des Kompressionskanals erreicht, und auch die dazu erforderliche Energieaufbringung wird durch die Preßkraft optimiert.

Vorteilhaft ist dabei eine Ausbildung nach Anspruch 4, wodurch ein ähnlicher Aufbau der einzelnen Preßvorrichtungen erreicht wird und somit die Herstellungskosten reduziert werden.

Eine Ausführungsvariante nach den Ansprüchen 5 und 6 hat den Vorteil, daß eine kompakte Bauweise der Preßvorrichtung erreicht wird, wodurch ein allfälliger Platzbedarf reduziert wird.

Eine vorteilhafte Weiterbildung ist in Anspruch 7 beschrieben, wodurch eine robuste Bauweise erreicht wird und überdies eine Linearführung für das Preßelement gewährleistet wird.

Von Vorteil ist eine Ausbildung nach Anspruch 8, wodurch ein Rückwärtsfließpressen der verdichteten Späne vermieden wird.

Mit den in Anspruch 9 beschriebenen Merkmalen wird in einfacher Weise eine Verdichtung bei gleichzeitigem Vorschub, d.h. Transport der Späne, erreicht.

Eine günstige Ausführungsvariante ist in Anspruch 10 beschrieben, durch den ermöglicht wird, daß der Vorpreßstempel in seiner am weitesten vorragenden Kompressionsstellung bündig mit einer gekrümmten Innenfläche eines weiteren Preßgehäuses, in dem ebenfalls eine Verdichtung stattfindet, abschließt und so diese Eintrittsöffnung zwischen den beiden Preßvorrichtungen für den Hauptpreßvorgang abgedichtet wird.

Durch die in Anspruch 11 beschriebenen Merkmale wird eine sehr gute homogene Verdichtung und Plastifizierung der Späne erreicht.

Von Vorteil ist aber auch eine Weiterbildung nach Anspruch 12, wodurch eine einfache Beschickung der Preßvorrichtung mit zu verdichtenden Metallteilen, insbesondere Spänen, erreicht wird.

Vorteilhaft ist weiters eine Ausbildung nach Anspruch 13, wodurch das bei der Verdichtung aus dem Gemenge der Späne ausscheidende Wasser aus der Preßvorrichtung abgeführt werden kann.

Vorteilhaft ist weiters eine Ausbildungsvariante nach Anspruch 14, wodurch zu verdichtende Späne ohne Verlust, insbesondere Mengenverluste, von der Fördereinrichtung in die Preßvorrichtung gelangen.

Eine Ausführung nach Anspruch 15 hat den Vorteil, daß die Späne in kontinuierlicher Weise gefördert werden und überdies eine Förderung ohne Klumpenbildung in robuster Weise möglich ist.

Eine vorteilhafte Weiterbildung ist in Anspruch 16 beschrieben, wodurch mit einfachen Mitteln ein Verdichtungsraum geschaffen wird.

Möglich ist aber auch eine Ausbildungsvariante nach Anspruch 17, wodurch eine exakte Führung des Preßelementes und somit eine Knickbelastung der Antriebsvorrichtung reduziert wird.

Durch die in Anspruch 18 beschriebenen Ausführungsdetails wird in einfacher Weise erreicht, daß die zu verdichtenden Späne nicht entgegen der Preßrichtung bewegt werden können und überdies eine Plastifizierung und damit eine gleichmäßige Homogenisierung der Späne stattfindet.

Günstig ist weiters eine Ausbildung nach Anspruch 19, wodurch die von Preßelementen ausgeübten Druckkräfte in Richtung der Symmetrieachsen der Preßgehäuse konzentriert werden und somit zu einer verbesserten Plastifizierung beitragen. Darüber hinaus wird dadurch eine Öffnung des Hauptpreßgehäuses abgedichtet, um das Hauptpreßgehäuse mit einer möglichst glatten Innenoberfläche für eine verbesserte Verdichtung auszugestalten.

Das in Anspruch 20 beschriebene Merkmal hat den Vorteil, daß dadurch die Verdichtung einen optimalen Wert erreicht.

Von Vorteil ist eine Weiterbildung nach Anspruch 21, wodurch eine Beschickungsöffnung so hergestellt werden kann, daß sich eine günstige Flußrichtung der Späne in die jeweilige Preßvorrichtung ergibt.

Vorteilhaft sind auch Ausbildungen nach den Ansprüchen 22 und 23, weil dadurch eine Stabilisierung des aus der Preßmatrize austretenden Materialstranges mit relativ hoher Temperatur erfolgt und eine Abkühlung bei gleichzeitiger Reduzierung der Reibung in den Werkzeugteilen erreicht wird.

Vorteilhaft ist aber auch eine Ausbildungsvariante nach Anspruch 24, wodurch auch im Hauptpreßgehäuse eine Abfuhr des durch die Verdichtung aus den Spänen austretenden Wassers möglich ist.

Eine vorteilhafte Weiterbildung ist in Anspruch 25 beschrieben, wodurch die Plastifizierung durch extern zugeführte Wärmeenergie beschleunigt und darüber hinaus die Entfeuchtung der Späne sowie ein homogener Aufbau der Preßlinge verbessert wird.

Eine günstige Ausführung ist in Anspruch 26 beschrieben, bei dem eine leichte Montage der Heizvorrichtung gewährleistet ist und überdies die Wärmeübertragung und der Wirkungsgrad der Heizvorrichtung erhöht wird.

Durch die in Anspruch 27 beschriebene Weiterbildung ist es möglich, den Preßstrang in die Form von Preßlingen und damit in eine leicht handzuhabende Dimension zu bringen.

Möglich ist aber auch eine Ausführungsform nach Anspruch 28, bei welcher die Zerkleinerung mit einfachen Mitteln und mit geringem Verschleiß ermöglicht wird.

Von Vorteil ist eine Variante nach Anspruch 29, wodurch die Preßlinge in eine Form gebracht werden können, in der sie in einfacher Weise einer Weiterverarbeitung zugeführt werden können.

Vorteilhaft ist eine Ausführungsvariante nach Anspruch 30, wodurch das Verdichten nicht durch oszillierende Bewegungen, sondern durch kontinuierliche Bewegungen stattfindet und so durch Reduzierung bzw. Entfall von allfälligen Taktzeiten die Produktionsleistung aber auch die Produktqualität erhöht wird.

Eine Ausführungsvariante nach Anspruch 31 hat den Vorteil, daß eine gleichförmige Zunahme des Drucks und damit eine kontinuierliche Verdichtung und Plastifizierung erreicht wird.

Die Erfindung betrifft auch eine Anlage, wie sie im Oberbegriff des Anspruches 32 beschrieben ist.

Der Erfindung liegt auch die Aufgabe zugrunde, eine Anlage zu schaffen, welche sich durch eine hohe Produktionsleistung und Produktqualität auszeichnet und bei der die fertigen Preßlinge einen geringen Feuchtigkeitsgrad und einen homogenen Aufbau besitzen. Überdies soll eine Lagerung der Späne in einem räumlich abgegrenzten Bereich möglich sein und eine gleichförmige Beschickung der Preßeinrichtung, unabhängig allfälliger Mengenschwankungen, beim Antransport der Späne erreicht werden.

Die Aufgabe der Erfindung wird durch die kennzeichnenden Merkmale des Anspruches 32 gelöst. Der überraschende Vorteil dabei ist, daß eine gute Entfeuchtung und eine homogene Plastifizierung der Späne zu Preßlingen erreicht wird.

Von Vorteil sind dabei Weiterbildungen nach Anspruch 33, welche die Vorteile der Ansprüche 2 bis 32 aufweisen.

Vorteilhaft ist eine Ausführungsvariante nach Anspruch 34, durch die es möglich ist, die Späne aufzulockern und so vermieden wird, daß es im Lagerbehälter, insbesondere im Übergangsbereich zwischen Lagerbehälter und Fördereinrichtung, zu einer sogenannten Brückenbildung kommt, welche einen kontinuierlichen Zufluß von Spänen aus dem Lagerbehälter zur Fördereinrichtung verhindern würde.

Die in Anspruch 35 beschriebene Variante hat den Vorteil, daß erforderliche, große Drehmomente in einfacher Weise erreicht werden.

Möglich ist dabei eine Ausführungsvariante nach Anspruch 36, wodurch das Auflockern der Späne im Lagerbehälter mit einfachen Mitteln erreicht wird.

Eine Weiterbildung nach Anspruch 37 hat den Vorteil, daß, beispielsweise bei Reparaturarbeiten, eine vollständige Entleerung des Lagerbehälters nicht erforderlich ist.

Anspruch 38 beschreibt eine robuste, störungsunanfällige und durch eine gleichmäßige Förderleistung gekennzeichnete Fördereinrichtung.

Durch die in Anspruch 39 beschriebenen Merkmale wird überraschend einfach zu einer Modulbauweise der Anlage beigetragen, wodurch erforderliche Lagerhaltungskosten für Ersatzteile reduziert werden.

Von Vorteil ist weiters eine Ausführungsvariante nach Anspruch 40, wodurch das Fördermittel einer Zugbelastung ausgesetzt wird und so ein Abknicken des Fördermittels im Förderzustand, d.h. im Belastungszustand, verhindert wird.

Vorteilhaft ist aber auch eine Weiterbildung nach Anspruch 41, wodurch bereits während der Förderung eine Trocknung der Metallteile bzw. Späne erreicht wird.

Durch die in Anspruch 42 beschriebenen Merkmale wird in einfacher Weise eine dichte Verbindung zwischen der Fördereinrichtung und der Preßvorrichtung geschaffen.

Die Erfindung betrifft aber auch ein Verfahren, wie es im Oberbegriff des Anspruches 43 beschrieben ist.

Aufgabe der Erfindung ist es, ein Verfahren zu schaffen, welches die an sich gegensätzlichen Ziele der Erhöhung der Produktionsleistung und Verbesserung der Qualität verbindet.

Diese Aufgabe der Erfindung wird durch die kennzeichnenden Maßnahmen im Anspruch 43 beschrieben. Der überraschende Vorteil dabei ist, daß damit eine Produktion von Preßlingen mit geringem Feuchtigkeitsgehalt und hohem Reinheitsgrad und damit ein sehr homogener Aufbau der Preßlinge erreicht wird. Dies ermöglicht, die daraus gewonnenen Preßlinge einem Schmelzvorgang zuzuführen, bei dem nur ein geringerer Prozentansatz von neuwertigen Materialien zugegeben werden muß, um daraus wieder neuwertige Teile und Maschinenelemente in einem Gieß- oder Spritzgießverfahren herzustellen, wodurch eine wirtschaftliche Verwertung der Späne erzielt wird und die Umwelt belastender Sonderabfall in hohem Ausmaß vermieden wird.

Die Erfindung wird anhand der in den Figuren beschriebenen Ausführungsbeispiele näher erläutert.

Es zeigen:
- Fig. 1: eine erfindungsgemäße Preßeinrichtung, teilweise geschnitten, in der Draufsicht;
- Fig. 2: die Preßeinrichtung, geschnitten, gemäß den Linien II - II in Fig. 1;
- Fig. 3: die Preßeinrichtung, geschnitten, gemäß den Linien III - III in Fig. 2;
- Fig. 4: einen Teilbereich der erfindungsgemäßen Preßeinrichtung, geschnitten, gemäß den Linien IV - IV in Fig. 1;
- Fig. 5: eine andere Ausführungsvariante einer erfindungsgemäßen Preßeinrichtung, teilweise geschnitten, in der Stirnansicht;
- Fig. 6: die erfindungsgemäße Preßeinrichtung, geschnitten, gemäß den Linien VI - VI in Fig. 5;
- Fig. 7: einen Teilbereich einer weiteren Ausführungsvariante einer erfindungsgemäßen Preßeinrichtung, insbesondere des Vorpreßwerkzeuges und des Hauptpreßwerkzeuges, geschnitten, in der Draufsicht;
- Fig. 8: eine andere Ausführungsvariante der erfindungsgemäßen Preßeinrichtung, geschnitten, in der Seitenansicht;
- Fig. 9: eine erfindungsgemäße Anlage, geschnitten, in der Stirnansicht;
- Fig. 10: eine Detaildarstellung des Werkzeuggehäuses der erfindungsgemäßen Preßeinrichtung mit dem Formhohlraum und der den Kompressionskanal ausbildenden Preßmatrize, geschnitten.

Einleitend sei festgehalten, daß in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Weiters können auch Einzelmerkmale aus den gezeigten unterschiedlichen Ausführungsbeispielen für sich eigenständige, erfindungsgemäße Lösungen darstellen.

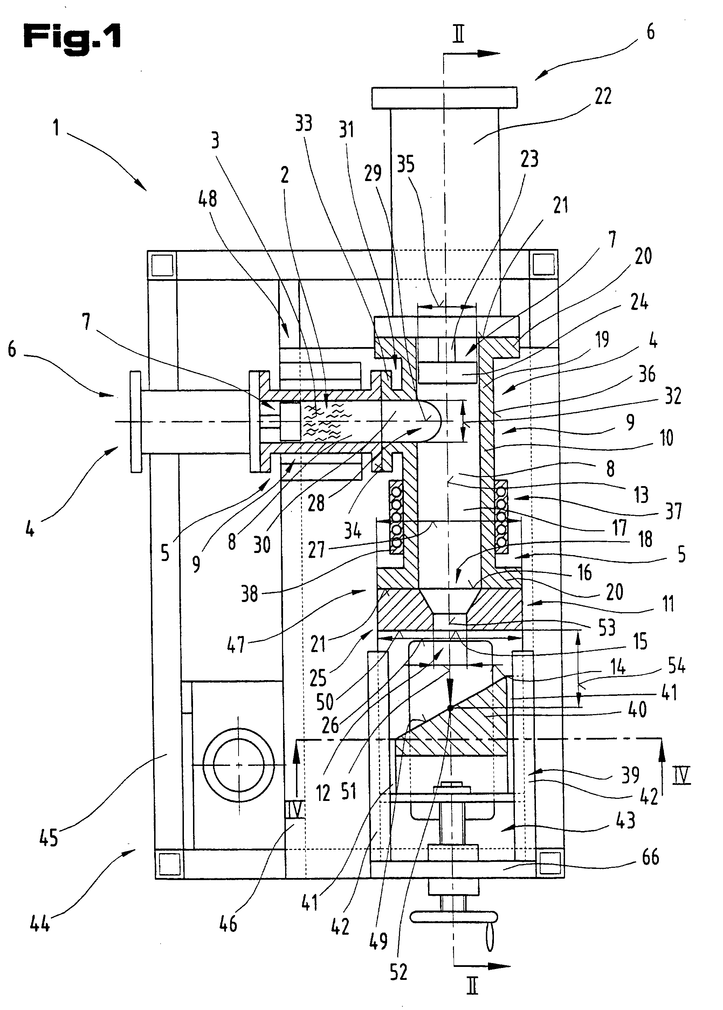

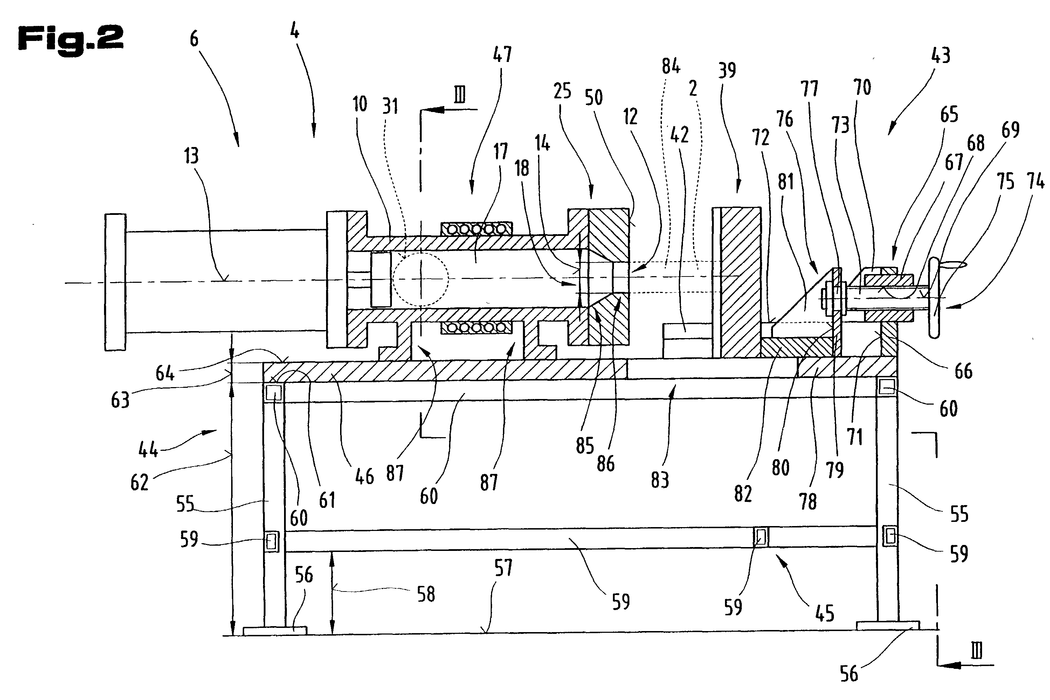

In den gemeinsam beschriebenen Fig. 1 bis 3 ist eine Preßeinrichtung 1 zur Bildung eines Materialstranges 2 durch Verdichtung von Spänen 3, welche beispielsweise aus Al, Cu, Mg oder aus Legierungen dieser Elemente oder anderer niedrig schmelzender Metalle oder deren Legierungen bestehen, gezeigt. Die Preßeinrichtung 1 besteht im vorliegenden Ausführungsbeispiel aus zwei Preßvorrichtungen 4, welche aus Preßwerkzeugen 5 und aus relativ zu den Preßwerkzeugen 5 über vorzugsweise druckmedienbetätigte Antriebsvorrichtungen 6 verstellbare Preßelemente 7, z.B. Preßstempel, bestehen. Die Preßwerkzeuge 5 weisen vorzugsweise zylindrische Formhohlräume 8 auf, welche von Werkzeuggehäusen 9 teilweise umgrenzt werden. Ein Werkzeuggehäuse 9, welches ein Hauptpreßgehäuse 10 ausbildet, weist entgegengesetzt zur Antriebsvorrichtung 6 eine Preßmatrize 11 auf, welche eine vorzugsweise kreisförmige Matrizenöffnung 12 besitzt, die konzentrisch zur Längsmittelachse 13 angeordnet ist. Die Matrizenöffnung 12 besitzt einen konzentrisch zur Längsmittelachse 13 verlaufenden Matrizeninnendurchmesser 14, welcher eine Durchtrittsfläche 15 der Matrizenöffnung 12 in entgegengesetzter Richtung zur Längsmittelachse 13 umgrenzt. Die Durchtrittsfläche 15 ist geringer als eine Querschnittsfläche 16 des den Formhohlraum 8 des Hauptpreßgehäuses 10 ausbildenden Hauptpreßhohlraumes 17. Damit wird in der Preßmatrize 11 ein sich vom Hauptpreßhohlraum 17 in Richtung der Durchtrittsfläche 15 konisch verjüngender Kompressionskanal 18 ausgebildet, in dem auf den Umfang des Materialstranges 2 während des diskontinuierlichen Durchpressens des Materialstranges 2 mit dem Preßelement 7 in Abhängigkeit vom Konizitätswinkel hohe Druckkräfte einwirken, wodurch in Abhängigkeit von Druckkraft und von außen eingebrachter Temperatureinwirkung ein hoher Homogenisierungsgrad im Materialstrang 2 erreicht wird.

Das Hauptpreßgehäuse 10 weist einen beispielsweise rohrförmigen Gehäuseabschnitt 19 auf, welcher in gegenüberliegenden Endbereichen durch Flansche 20 begrenzt wird. An einer in einer rechtwinkelig zur Längsmittelachse 13 verlaufenden Ebene liegende Flanschstirnfläche 21 ist die, insbesondere als Hydraulikzylinder 22 ausgebildete, Antriebsvorrichtung 6 angeordnet. Eine konzentrisch zur Längsmittelachse 13 verlaufende Zylinderstange 23 überragt die Flanschstirnfläche 21 in Richtung der dieser gegenüberliegenden Preßmatrize 11 und weist einen das Preßelement 7 ausbildenden Hauptpreßstempel 24 auf, welcher entlang der Längsmittelachse 13 im Hauptpreßhohlraum 17 linear beweglich verstellbar ist. An dem der Antriebsvorrichtung 6 gegenüberliegenden Flansch 20 des Hauptpreßgehäuses 10 ist eine die Preßmatrize 11 bildende Hauptpreßmatrize 25 angeordnet, welche eine den Flansch 20 der Antriebsvorrichtung 6 abgewandte Flanschstirnfläche 21, entgegengesetzt zur Antriebsvorrichtung 6 überragt. Diese Hauptpreßmatrize 25 besitzt einen in einer rechtwinkelig zur Längsmittelachse 13 liegenden Ebene verlaufenden Matrizenaußendurchmesser 26, welcher in etwa einem parallel zu diesem verlaufenden Flanschaußendurchmesser 27 des Flansches 20 entspricht. Im Gehäuseabschnitt 19 des Hauptpreßgehäuses 10 befindet sich eine Eintrittsöffnung 28, welche konzentrisch um eine Öffnungsachse 29 verläuft, die vorzugsweise rechtwinkelig zur Längsmittelachse 13 angeordnet ist. Von der Eintrittsöffnung 28 erstreckt sich in die entgegengesetzte Richtung zum Hauptpreßhohlraum 17 ein konzentrisch zur Öffnungsachse 29 angeordneter Eintrittskanal 30, welcher von einem am Gehäuseabschnitt 19 bewegungsfest angeordneten Eintrittsstutzen 31 umgrenzt wird. Der Eintrittsstutzen 31 besitzt einen den Eintrittskanal 30 und die Eintrittsöffnung 28 umgrenzenden, in einer rechtwinkelig zur Öffnungsachse 29 verlaufenden Ebene liegenden Eintrittsdurchmesser 32, welcher beispielsweise kleiner ist als der Querschnitt des Hauptpreßhohlraumes 17. Weiters besitzt der Eintrittsstutzen 31 einen parallel zum Eintrittsdurchmesser 32 verlaufenden Stutzenflansch 33, welcher in entgegengesetzter Richtung zum Hauptpreßgehäuse 10 von einer parallel zum Eintrittsdurchmesser 32 verlaufenden Stutzenstirnfläche 34 begrenzt wird.

Der Hauptpreßstempel 24 wird von einem rechtwinkelig zur Längsmittelachse 13 gemessenen Stempeldurchmesser 35 umgrenzt, welcher in etwa dem Querschnitt des Hauptpreßhohlraumes 17 entspricht. Das Hauptpreßgehäuse 10 weist weiters an einer Außenfläche 36, welche den Gehäuseabschnitt 19 entgegengesetzt zum Hauptpreßhohlraum 17 umgrenzt, eine Heizvorrichtung 37 auf. Diese ist vorzugsweise durch ein oder mehrere elektrische Heizbänder 38 gebildet, wobei die Heizvorrichtung 37 des Hauptpreßgehäuses 10, insbesondere zwischen dem der Hauptpreßmatrize 25 zugeordneten Flansch 20 und dem Eintrittsstutzen 31, angeordnet ist.

Von der Hauptpreßmatrize 25 in entgegengesetzter Richtung zur Antriebsvorrichtung 6 beabstandet, befindet sich eine Zerkleinerungsvorrichtung 39 für den Materialstrang 2. Die Zerkleinerungsvorrichtung 39 besteht aus einem Auflaufelement 40, welches Führungsstege 41 besitzt, welche symmetrisch um die Längsmittelachse 13 angeordnet sind. Die Führungsstege 41 sind in Führungsleisten 42 gelagert und in paralleler Richtung zur Längsmittelachse 13 über eine Verstellvorrichtung 43 linear beweglich. Die Preßeinrichtung 1 weist weiters ein Gestell 44 auf, welches aus Profilelementen 45, beispielsweise aus Hohlprofilen, gebildet ist. Weiters besitzt das Gestell 44 eine mit den Profilelementen 45 bewegungsfest verbundene Auflageplatte 46, auf der die Preßwerkzeuge 5, insbesondere ein durch das Hauptpreßgehäuse 10 und die Hauptpreßmatrize 25 gebildetes Hauptpreßwerkzeug 47 und ein am Eintrittsstutzen 31 angeordnetes Vorpreßwerkzeug 48 sowie die Zerkleinerungsvorrichtung 39 und die Verstellvorrichtung 43, angeordnet sein können.

Das Auflaufelement 40 der Zerkleinerungsvorrichtung 39 besitzt eine Gleitfläche 49, welche einer die Hauptpreßmatrize 25 entgegengesetzt zur Antriebsvorrichtung 6 begrenzenden Frontfläche 50 zugewandt ist und winkelig zu einer Hauptpreßrichtung - Pfeil 51 - angeordnet ist. Das Auflaufelement 40, insbesondere eine auf der Gleitfläche 49 rechtwinkelig zur Auflageplatte 46 verlaufende Schnittlinie 52, welche durch einen Schnitt einer rechtwinkelig zur Auflageplatte 46 in einer Längsmittelebene 53 verlaufenden Längsmittelebene 54 mit der Gleitfläche 49 gebildet wird, ist von der Frontfläche 50 der Hauptpreßmatrize 25 um einen parallel zur Hauptpreßrichtung - Pfeil 51 - gemessenen Abstand 54 distanziert.

Das Gestell 44 besteht aus Vertikalprofilen 55, welche über Fußplatten 56 auf einer horizontal verlaufenden Aufstandsfläche 57 bewegungsfest lös- oder unlösbar angeordnet sind. In einem rechtwinkelig zur Aufstandsfläche 57 gemessenen Abstand 58 verlaufen parallel zur Aufstandsfläche 57 Verbindungsprofile 59, welche bewegungsfest mit den Vertikalprofilen 55 verbunden sind. Mit den Vertikalprofilen 55 bewegungsfest verbunden, sind weiters Horizontalprofile 60, welche eine Oberseite 61 aufweisen, die parallel zur Aufstandsfläche 57 verläuft und von dieser um eine rechtwinkelig zur Aufstandsfläche 57 gemessene Gestellhöhe 62 beabstandet ist. Auf der Oberseite 61 diese entgegengesetzt zur Aufstandsfläche 57 überragend befindet sich die Auflageplatte 46, welche eine parallel zur Gestellhöhe 62 von der Oberseite 61 in entgegengesetzter Richtung zur Aufstandsfläche 57 gemessene Plattendicke 63 besitzt, die eine die Auflageplatte 46 entgegengesetzt zur Aufstandsfläche 57 begrenzende Auflageebene 64 von der Oberseite 61 distanziert.

Die auf der Auflageplatte 46 angeordnete Verstellvorrichtung 43 weist eine Konsole 65 auf, welche aus einer die Auflageebene 64 rechtwinkelig überragenden Konsolenplatte 66 und einer mit dieser bewegungsfest verbundenen Spindelmutter 67 besteht. Die Konsolenplatte 66 ist dabei rechtwinkelig zur Längsmittelebene 53 angeordnet. Die Spindelmutter 67 ist vorzugsweise zylindrisch ausgebildet und weist ein Innengewinde 68 auf, welches konzentrisch um eine parallel zur Auflageebene 64 und vorzugsweise in der Längsmittelebene 53 verlaufenden Spindelachse 69 angeordnet ist. Weiters besitzt die Konsole 65 Versteifungsplatten 70, welche eine rechtwinkelige zur Auflageebene 64 verlaufende Plattenstirnfläche 71 in Richtung der Preßvorrichtung 4 überragt und welche mit der Plattenstirnfläche 71 und einer parallel zur Auflageebene 64 verlaufenden Leistenoberfläche 72 der Führungsleisten 42 bewegungsfest verbunden ist.

In der Spindelmutter 67, insbesondere im Innengewinde 68, befindet sich eine Spindel 73, welche in einem der Preßvorrichtung 4 abgewandten Endbereich ein Antriebselement 74, beispielsweise in Form eines Handrades 75, aufweist. Die Spindel 73 ist in einem der Preßvorrichtung 4 zugewandten Endbereich 76 über eine Lagervorrichtung 77 in einer Führungskonsole 78 drehbar gelagert, welche aus einer Querplatte 79 gebildet ist, die parallel zur Konsolenplatte 66 verläuft. An einer der Konsole 65 abgewandten, rechtwinkelig zur Auflageebene 64 verlaufenden Innenseite 80 weist die Querplatte 79 Versteifungsrippen 81 auf, welche mit einer Platte 82 der Zerkleinerungsvorrichtung 39 verbunden sind. Die Auflageplatte 46 besitzt einen Durchbruch 83, durch welchen der die Frontfläche 50 der Hauptpreßmatrize 25 überragende, in strichlierten Linien dargestellte Materialstrang 2 in Preßlinge 84 zerkleinert wurde, welche in Richtung zur Aufstandsfläche 57 fallen.

Die Hauptpreßmatrize 25 weist die bereits beschriebene Matrizenöffnung 12 auf. Diese besteht aus einem dem Hauptpreßhohlraum 17 benachbarten und den Kompressionskanal 18 ausbildenden Konusabschnitt 85 und einen Zylinderabschnitt 86, welcher sich vom Konusabschnitt 85 in Richtung der Zerkleinerungsvorrichtung 39 erstreckt. Der Zylinderabschnitt 86 verläuft konzentrisch um die Längsmittelachse 13 und besitzt den Matrizeninnendurchmesser 14. Der Konusabschnitt 85 verläuft vom Querschnitt des Hauptpreßhohlraumes 17 verjüngend bis zum Matrizeninnendurchmesser 14. Das Hauptpreßgehäuse 10 besitzt weiters bewegungsfest mit diesem verbundene Fußkonsolen 87, mittels der das Hauptpreßwerkzeug 47 mit dem Gestell 44 bewegungsfest verbunden ist.

Selbstverständlich ist es möglich, die Verstellvorrichtung 43 nicht nur manuell betätigbar auszubilden, sondern auch elektrisch, insbesondere elektromotorisch oder hydraulisch.

Das Hauptpreßwerkzeug 47, insbesondere das Hauptpreßgehäuse 10, weist, wie bereits beschrieben, den Eintrittsstutzen 31 auf. An diesem ist das Vorpreßwerkzeug 48 angeordnet.

Dieses weist das Werkzeugehäuse 9 auf, welches als Vorpreßgehäuse 88 ausgebildet ist. Das Vorpreßgehäuse 88 umgrenzt einen den Formhohlraum 8 bildenden Vorpreßhohlraum 89 zumindest teilweise und besitzt konzentrisch um eine vorzugsweise rechtwinkelig zur Längsmittelebene 53 verlaufende Mittelachse 90 umlaufende Flansche 91. Der dem Hauptpreßwerkzeug 47 zugeordnete Flansch 91 ist dabei mit dem Stutzenflansch 33 des Eintrittsstutzen 31 bewegungsfest verbunden, während der dem Hauptpreßwerkzeug 47 abgewandte Flansch 91 mit der Antriebsvorrichtung 6, insbesondere mit einem Flansch eines Hydraulikzylinders 92, verbunden ist. Es ist jedoch auch möglich, das Vorpreßgehäuse 88 direkt am Hauptpreßgehäuse 10 ohne Eintrittsstutzen 31 unlösbar anzuordnen.

Im Vorpreßhohlraum 89 befindet sich ein das Preßelement 7 ausbildender Vorpreßstempel 93, welcher vorzugsweise zylinderförmig ausgebildet ist und einen konzentrisch um die Mittelachse 90 angeordneten Zylinderdurchmesser 94 aufweist, welcher in etwa einem Querschnittsdurchmesser 95 entspricht, der den vorzugsweise zylindrisch ausgebildeten Vorpreßhohlraum 89 in Richtung zur Mittelachse 90 begrenzt. Der Vorpreßstempel 93 ist längs der Mittelachse 90 linear beweglich im Vorpreßhohlraum 89 gelagert. Der Vorpreßstempel 93 besitzt eine dem Hauptpreßwerkzeug 47 zugewandte Druckfläche 96, welche konkav verläuft und einen von einem auf der Mittelachse 90 liegenden Mittelpunkt gemessenen Radius 97 besitzt, welcher in etwa den halben Wert des Querschnittes des Hauptpreßgehäuses 10 aufweist.

Das Vorpreßgehäuse 88 weist eine Eingangsöffnung 98 auf, welche eine Bohrungsachse 99 besitzt, die rechtwinkelig zur Mittelachse 90 und beispielsweise rechtwinkelig zur Auflageebene 64 verläuft. Konzentrisch um die Bohrungsachse 99 verläuft ein Eingangsstutzen 100, welcher die Eingangsöffnung 98 umgrenzt und einen Eingangsflansch 101 besitzt, der konzentrisch zur Bohrungsachse 99 und parallel zur Auflageebene 64 angeordnet ist. Am Eingangsstutzen 100 angeordnet und diesen in entgegengesetzter Richtung zum Vorpreßgehäuse 88 überragend, ist ein Abwurfschacht 102 angeordnet, welcher die Eingangsöffnung 98 mit einer Auswurföffnung 103 einer Fördereinrichtung 104 verbindet. Diese Fördereinrichtung 104 kann beispielsweise als Schneckenförderer, als Spiralschneckenförderer, als Kettenförderer oder als Bandförderer ausgebildet sein. Das Vorpreßgehäuse 88 weist weiters Fußkonsolen 105 auf, welche das Vorpreßgehäuse 88 mit der Auflageplatte 46 verbinden. Es ist jedoch auch möglich, die Fördereinrichtung 104 direkt mit dem Vorpreßgehäuse 88 ohne Zwischenschaltung eines Abwurfschachtes 102 oder, falls die Preßeinrichtung 1 lediglich ein Hauptpreßwerkzeug 47 aufweist, mit dem Hauptpreßgehäuse 10 zu verbinden.

Im Gestell 44 befindet sich eine Energieversorgungseinrichtung 106, beispielsweise ein Hydraulikaggregat 107, welche die Antriebsvorrichtungen 6, beispielsweise den Hydraulikzylinder 92, über eine Leitung 108 mit Energie, insbesondere Druckenergie, beaufschlagt. Darüberhinaus kann an der Energieversorgungseinrichtung 106 oder am Gestell 44 eine Steuerungseinrichtung 109 angeordnet sein, welche zur Steuerung von Schaltgliedern 110, insbesondere Hydraulikventilen 111, dient. Weiters kann im Gestell 44 ein Endbereich einer in strichlierten Linien dargestellten Abtransporteinrichtung 112 oder ein Behälter für die Preßlinge 84 angeordnet sein.

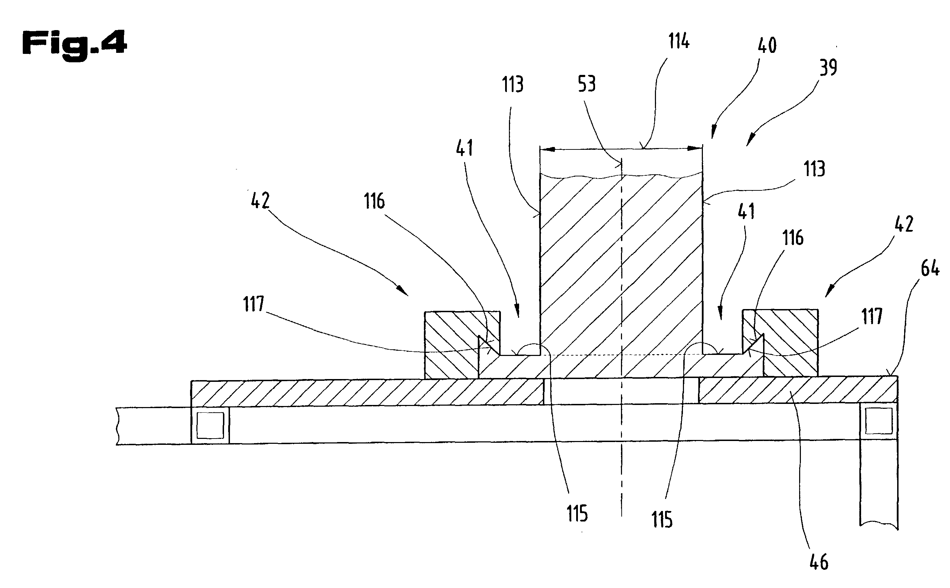

In der Fig. 4 ist die Zerkleinerungsvorrichtung 39 im Querschnitt dargestellt. Dabei ist ersichtlich, daß das Auflaufelement 40 durch parallel zur Längsmittelebene 53 verlaufende Seitenflächen 113 begrenzt wird, welche voneinander um eine Breite 114 beabstandet sind. Die Seitenflächen 113 werden entgegengesetzt zur Längsmittelebenen 53 von den Führungsstegen 41 überragt. Von der Auflageebene 64 abgewandt und parallel zu dieser verlaufend werden die Führungsstege 41 von Oberflächen 115 und rechtwinkelig dazu verlaufend von Stirnseitenflächen 116 begrenzt. Den Führungsstegen 41 zugeordnet sind, bevorzugt mit der Auflageplatte rüstbar verbunden, die Führungsleisten 42 angeordnet, die mit einer in Längsrichtung verlaufenden Aufnehmung Führungsflächen 117 ausbilden, wodurch sich eine sehr stabile Führung des verstellbaren Auflaufelementes 40 ergibt. Natürlich ist es möglich, beliebige Führungskonstruktionen aus der Vielzahl von technischen Möglichkeiten auszubilden, wie z.B. Prismenführungen, Schwalbenschwanzführungen etc.

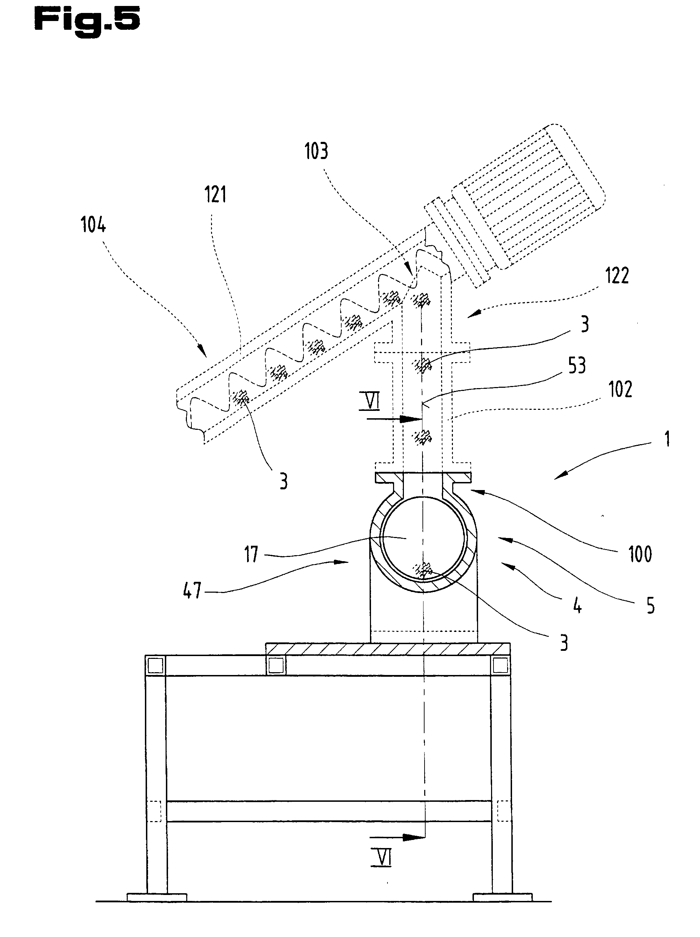

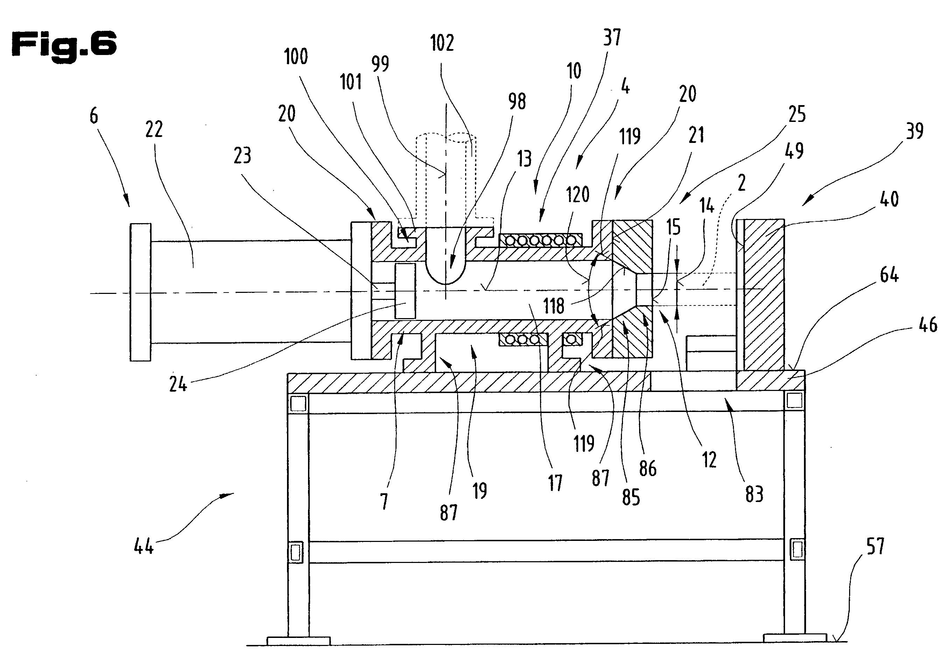

In den gemeinsam beschriebenen Fig. 5 und 6 ist eine weitere Ausführungsvariante der Preßeinrichtung 1 mit einer einzigen Preßvorrichtung 4 gezeigt. Die Preßvorrichtung 4 besteht dabei aus dem Preßwerkzeug 5, insbesondere dem Hauptpreßwerkzeug 47, welches das Hauptpreßgehäuse 10 bestehend aus dem Gehäuseabschnitt 19 und den Flanschen 20 aufweist. An einem Flansch 20, insbesondere an der Flanschstirnfläche 21, welche rechtwinkelig zur Längsmittelachse 13 verläuft, ist die Hauptpreßmatrize 25 mit der Matrizenöffnung 12 angeordnet. Am entgegengesetzt zur Hauptpreßmatrize 25 angeordneten Flansch 20 des Hauptpreßgehäuses 10 ist die Antriebsvorrichtung 6, beispielsweise in Form des Hydraulikzylinders 22, angeordnet, welcher über eine Zylinderstange 23 den als Preßelement 7 ausgebildeten Hauptpreßstempel 24 längs der Längsmittelachse 13 im vom Hauptpreßgehäuse 10 umgrenzten Hauptpreßhohlraum 17 linear bewegt. Das Hauptpreßgehäuse 10 ist wiederum über Fußkonsolen 87 auf der Auflageplatte 46, welcher vom Gestell 44 gehaltert wird, angeordnet. Im Gegensatz zu den vorhergehenden Beispielen, weist das Hauptpreßgehäuse 10 die Eingangsöffnung 98 auf, deren Bohrungsachse 99 beispielsweise rechtwinkelig zur Längsmittelachse 13 und zur Auflageebene 64 der Auflageplatte 46 angeordnet ist. Die Eingangsöffnung 98 wird vom Eingangsstutzen 100 umgrenzt, welcher konzentrisch um die Bohrungsachse 99 angeordnet ist. Der Eingangsstutzen 100 besitzt den Eingangsflansch 101, welcher parallel zur Auflageebene 64 verläuft und an welchen der Abwurfschacht 102, der in strichlierten Linien dargestellt ist, angeordnet ist. Von der Hauptpreßmatrize 25 beabstandet befindet sich wiederum die Zerkleinerungsvorrichtung 39 in Form des Auflaufelementes 40.

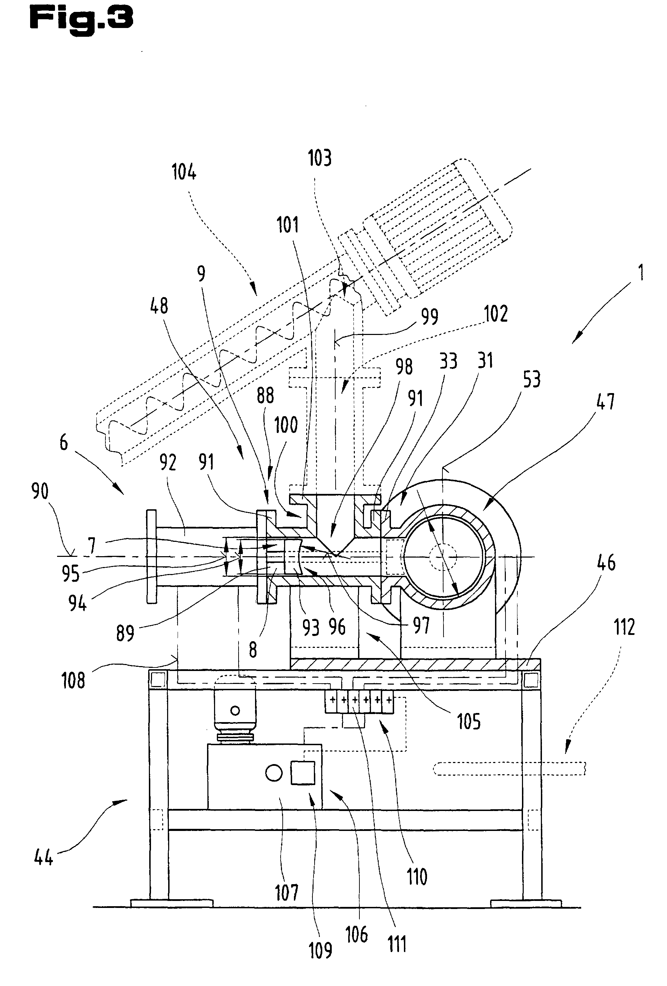

Die Zerkleinerungsvorrichtung 39 kann jedoch auch beispielsweise als starre oder "fliegende" Säge ausgebildet sein. Die Matrizenöffnung 12 besteht wiederum aus einem Konusabschnitt 85 und einem Zylinderabschnitt 86, der durch den Matrizeninnendurchmesser 14 begrenzt wird. Der Konusabschnitt 85 besitzt eine Mantelfläche 118, welche ringförmig um die Längsmittelachse 13 verläuft und sich vom Querschnitt des Hauptpreßgehäuses 10 zum Matrizeninnendurchmesser 14 verringert. Dabei sind Tangentenlinien 119 der Mantelfläche 118, welche in der Längsmittelebene 53 verlaufen, so angeordnet, daß sie einen Konuswinkel 120 von 10° bis 20°, bevorzugt 16°, einschließen. Das Hauptpreßgehäuse 10 kann weiters eine oder mehrere Abluftöffnungen aufweisen, über welche die aus dem Gemenge der Späne 3 austretende Flüssigkeit, beispielsweise das Kühlwasser, Bohrwasser, Schleifwasser, auf dem Hauptpreßhohlraum 17 abgeleitet wird. Derartige Ablauföffnungen können auch in dem in Fig. 3 dargestellten Vorpreßgehäuse 88 angeordnet sein.

Die zu verdichtenden Späne 3 werden nun über die Fördereinrichtung 104 herantransportiert und gelangen über die in einem Fördergehäuse 121 der Fördereinrichtung 104 angeordnete Auswurföffnung 103, welche von einem mit dem Fördergehäuse 121 verbunden Abwurfstutzen 122 umgrenzt wird, in den Abwurfschacht 102, welcher mit dem Eingangsstutzen 100 bewegungsfest verbunden ist. Über diesen Eingangsstutzen 100 gelangen nun die Späne 3 in den Hauptpreßhohlraum 17 und werden mit dem Preßelement 7, welches über die Antriebsvorrichtung 6 in Richtung zur Hauptpreßmatrize 25 bewegt wird, gegen diese gedrückt. Bei einem bestimmten Druck bzw. einer Preßkraft und einer durch die Heizvorrichtung 37 erzeugten Temperaturerhöhung erfolgt an der Mantelfläche 118 eine Kompression und eine Fließbewegung längs der Tangentenlinien 119 in Richtung zur Matrizenöffnung 12 und bei weiterem Verpressen ein Austreten des Materialstranges 2 aus der Matrizenöffnung 12 in Richtung zur Zerkleinerungsvorrichtung 39. Gelangen nun die verdichteten Späne 3 an die der Hauptpreßmatrize 25 zugewandte Gleitfläche 49 des Auflaufelementes 40, so bewirkt diese ein Ablenken der verdichteten Späne 3, wodurch ein Bruch im Bereich der Durchtrittsfläche 15 der Matrizenöffnung 12 entsteht. Die verdichteten Späne 3 fallen durch den Durchbruch 83 in Richtung zur Aufstandsfläche 57, wo sie aufgesammelt bzw. abtransportiert werden können.

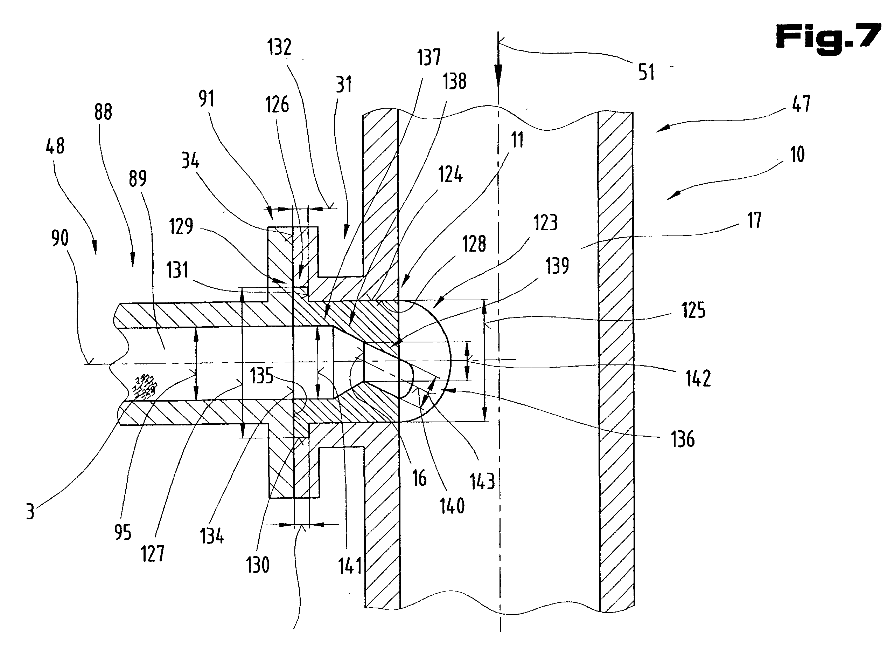

In der Fig. 7 ist eine weitere Ausführungsvariante einer Preßmatrize 11, insbesondere einer Vorpreßmatrize 123 dargestellt. Sie ist insbesondere zylinderförmig ausgebildet und weist eine konzentrisch um die Mittelachse 90 verlaufende Zylindermantelfläche 124 auf, welche von einem Manteldurchmesser 125 begrenzt wird. In einem dem Vorpreßgehäuse 88 zugewandten Bereich besitzt die Vorpreßmatrize 123 einen konzentrisch um die Mittelachse 90 verlaufenden Bund 126, welcher vom Bunddurchmesser 127 umgrenzt wird. Dieser ist größer als der Manteldurchmesser 125. Die Vorpreßmatrize 123 ist beispielsweise im Eintrittsstutzen 31 angeordnet, wobei die Zylindermantelfläche 124 an einer konzentrisch um die Mittelachse 90 umlaufenden zylindrischen Stutzeninnenfläche 128 anliegt. Sie wird von einem Durchmesser begrenzt, welcher gleich oder größer ist als der Manteldurchmesser 125.

Der Eintrittsstutzen 31 besitzt weiters eine Einformung 129 für den Bund 126, welcher aus einer konzentrisch um die Mittelachse 90 umlaufenden Bundfläche 130 und einer in einer rechtwinkelig zur Mittelachse 90 liegenden Ebene verlaufenden Ringfläche 131 begrenzt wird. Die Ringfläche 131 ist von der Stutzenstirnfläche 34 des Eintrittsstutzens 31 um eine Tiefe 132 in Richtung zum Hauptpreßgehäuse 10 beabstandet, welche gleich oder größer ist als eine parallel zu dieser gemessene Bundbreite 133, welche eine dem Vorpreßgehäuse 88 zugewandte Bundstirnfläche 134, die in einer rechtwinkelig zur Mittelachse 90 verlaufenden Ebene liegt, und die Ringfläche 131 voneinander beabstandet. Die Stutzenstirnfläche 34 und/oder die Bundstirnfläche 134 liegen dabei bündig an einer Flanschstirnfläche 135 des Flansches 91 des Vorpreßgehäuses 88 an.

Die Vorpreßmatrize 123 besitzt wiederum eine Matrizenöffnung 136, welche aus einem konzentrisch um die Mittelachse 90 umlaufenden, den Flansch 91 des Vorpreßgehäuses 88 benachbart angeordneten Zylinderabschnitt 137, einem im Anschluß an diesen in Richtung zum Hauptpreßgehäuse 10 verlaufenden Konusabschnitt 138 und einem vom Konusabschnitt 138 in Richtung zum Hauptpreßgehäuse 10 verlaufenden Schrägkanal 139 besteht. Der Schrägkanal 139 besitzt eine Kanalachse 140, welche winkelig zur Mittelachse 90 vom Konusabschnitt 138 in entgegengesetzter Richtung zur nicht dargestellten Antriebsvorrichtung 6 des Hauptpreßwerkzeuges 47 verläuft. Der Zylinderabschnitt 137 besitzt einen konzentrisch um die Mittelachse 90 verlaufenden Abschnittsdurchmesser 141, welcher dem Querschnittsdurchmesser 95 des Vorpreßhohlraumes 89 des Vorpreßgehäuses 88 entspricht. Der Konusabschnitt 138 verläuft verjüngend in Richtung zum Hauptpreßhohlraum 17 des Hauptpreßgehäuses 10 bis zu einem Matrizeninnendurchmesser 142, welcher in etwa einem Kanaldurchmesser 143 entspricht, der rechtwinkelig zur Kanalachse 140 gemessen wird.

Durch diese Konstruktion der Vorpreßmatrize wird erreicht, daß diese zum einen auswechselbar ausgebildet ist und zum anderen die im Vorpreßhohlraum 89 befindlichen Späne 3 bereits im Vorpreßwerkzeug 48 homogen plastifiziert werden und zugleich in Richtung der Hauptpreßrichtung - Pfeil 51 - umgelenkt werden, wodurch ein hoher Wirkungsgrad bei der anschließenden Verdichtung im Hauptpreßwerkzeug 47 erreicht wird.

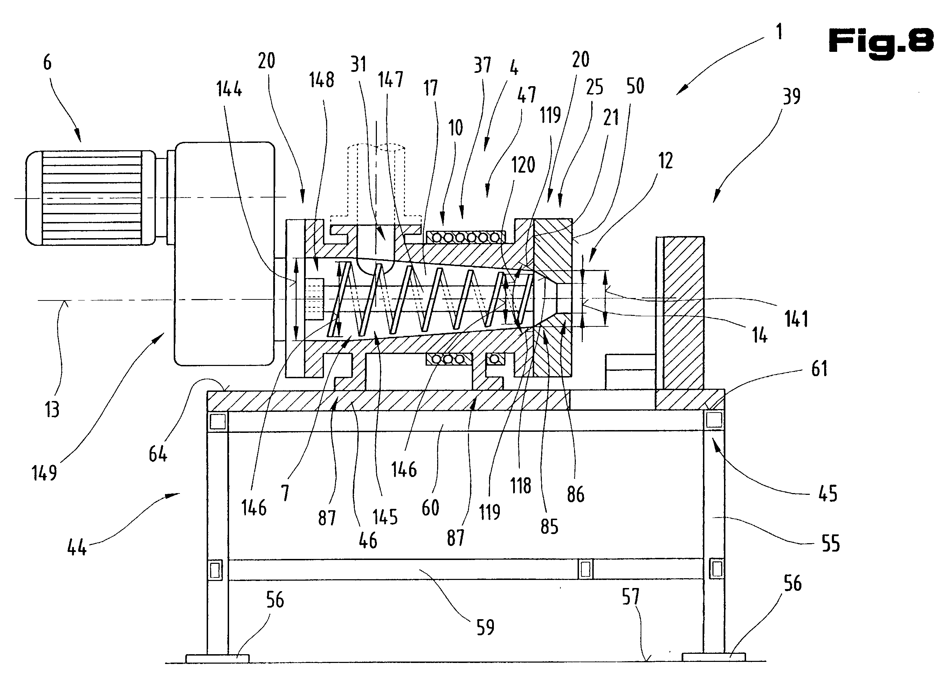

In der Fig. 8 ist eine weitere Ausführungsvariante einer erfindungsgemäßen Preßeinrichtung 1 gezeigt. Diese weist das Gestell 44 auf, welches aus Profilelementen 45, insbesondere aus Vertikalprofilen 55, die über Fußplatten 56 mit einer Aufstandsfläche 57 verbunden sind, und aus Horizontalprofilen 60 besteht. Weiters weist das Gestell 44 Verbindungsprofile 59 auf. An einer parallel und abgewandt zur Aufstandsfläche 57 verlaufenden Oberseite 61 des Gestells 44 ist die Auflageplatte 46 angeordnet, welche die parallel zur Aufstandsfläche 57 verlaufende Auflageebene 64 für zumindest eine Preßvorrichtung 4 bildet. Die Preßvorrichtung 4 besteht im vorliegenden Beispiel aus dem Hauptpreßwerkzeug 47, welches das Hauptpreßgehäuse 10 und die Hauptpreßmatrize 25 umfaßt. Die Hauptpreßmatrize 25 besitzt wiederum die Matrizenöffnung 12, welche konzentrisch um die Längsmittelachse 13 angeordnet ist und einen Konusabschnitt 85 sowie in entgegengesetzter Richtung zu einer Antriebsvorrichtung 6 den Zylinderabschnitt 86 aufweist. Der Zylinderabschnitt 86 ist dabei als Bohrung mit einem Matrizeninnendurchmesser 14 ausgebildet. Von der Frontfläche 50 der Hauptpreßmatrize 25, welche rechtwinkelig zur Auflageebene 64 verläuft und entgegengesetzt zur Antriebsvorrichtung 6 die Hauptpreßmatrize 25 begrenzt, ist in entgegengesetzter Richtung zur Antriebsvorrichtung 6 die Zerkleinerungsvorrichtung 39 beabstandet angeordnet. Der Konusabschnitt 85, insbesondere dessen Mantelfläche 118, besitzt in einer rechtwinkelig zur Auflageebene 64 verlaufenden Ebene Tangentenlinien 119, welche von einem Schnittpunkt mit Begrenzungslinien des Matrizeninnendurchmessers 14 in Richtung zur Antriebsvorrichtung 6 und einander abgewandt erweiternd verlaufen und einen Konuswinkel 120 des Konusabschnittes 85 bilden.

Im Bereich der Flanschstirnfläche 21 des der Antriebsvorrichtung 6 abgewandten Flansches 20 des Hauptpreßgehäuses 10 weist der Konusabschnitt 85 den Abschnittsdurchmesser 141 auf, welcher größer ist als der Matrizeninnendurchmesser 14. Diesem entspricht der Querschnitt, des im vorliegenden Ausführungsbeispiel kegelstumpfförmigen Hauptpreßhohlraumes 17. Das bedeutet nun, daß der Hauptpreßhohlraum 17 konzentrisch um die Längsmittelachse 13 verläuft und vom Querschnitt in Richtung zur Antriebsvorrichtung 6 sich erweitert und im Bereich des der Antriebsvorrichtung 6 benachbarten Flansches 20 einen Innendurchmesser 144 besitzt, welcher größer ist als der Querschnitt. Im kegelstumpfförmig verlaufenden Hauptpreßhohlraum 17 befindet sich eine das Preßelement 7 ausbildende Schnecke 145, welche insbesondere als Konusschnecke ausgebildet ist. Diese weist in etwa im Bereich des der Antriebsvorrichtung 6 zugeordneten Flansches 20 des Hauptpreßgehäuses 10 einen Außendurchmesser 146 auf, welcher geringfügig kleiner ist als der Innendurchmesser 144 und in Richtung zur Hauptpreßmatrize 25 hin abnimmt und im Bereich des der Hauptpreßmatrize 25 zugeordneten Flansches 20 einen Außendurchmesser 146 aufweist, welcher kleiner als der Querschnittsdurchmesser ist. Die Schnecke 145 besitzt weiters eine Schneckenachse 147, welche in Richtung der Längsmittelachse 13 verläuft und im Querschnitt konzentrisch um die Längsmittelachse 13 angeordnet ist. Sie besitzt vorzugsweise einen zylinderförmigen Verlauf. Sie kann jedoch auch dem kegelstumpfförmigen Verlauf der Schnecke 145 angepaßt sein und ebenfalls konisch verjüngend von der Antriebsvorrichtung 6 zur Hauptpreßmatrize 25 verlaufen. Die Schnecke 145 ist über eine Kupplungs- und/oder Lagervorrichtung 148 mit der Antriebsvorrichtung 6 verbunden, welche im vorliegenden Beispiel als Stirnradgetriebemotor 149 ausgebildet sein kann. Weiters besitzt das Hauptpreßgehäuse 10 den Eintrittsstutzen 31 und die Heizvorrichtung 37 und ist über Fußkonsolen 87 mit der Auflageplatte 46 verbunden.

Selbstverständlich ist auch die Ausbildung der Schnecke 145 in zylindrischer Form möglich. Auch ist weiters eine Ausbildung möglich, bei der eine derartige, einen zylindrischen Außenmantel aufweisende Schnecke 145 zusätzlich über eine Antriebsvorrichtung im Gehäuse in Richtung ihrer Längserstreckung verstellbar ist und damit einerseits eine Förderung der Späne 3 in Richtung des Konusabschnittes 85 bewirkt wird und bei einer Verstellung der Schnecke 145 in Richtung des Konusabschnittes 85 eine zusätzliche Druckbeaufschlagung zur Verdichtung der Späne 3 und zur Bildung des homogenen Materialstranges 2 erreicht wird.

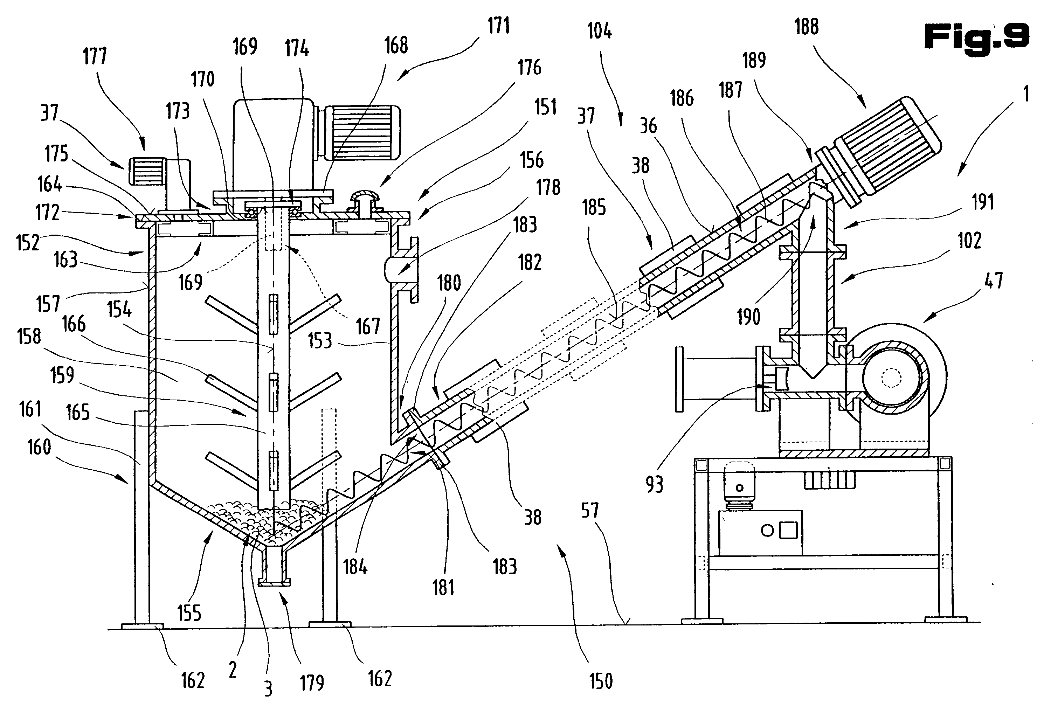

In der Fig. 9 ist eine Anlage 150 zur Verdichtung von Materialsträngen 2, insbesondere Spänen 3, aus Fe, Al, Mg oder Legierungen mit Fe, Al, Mg dargestellt. Diese besteht aus zumindest einer Lagereinrichtung 151 für die Späne 3 und zumindest einer Fördereinrichtung 104 sowie einer oder mehrerer Preßeinrichtungen 1. Die Lagereinrichtung 151 ist als Lagerbehälter 152 ausgebildet und weist einen Zylindermantel 153 auf, welcher konzentrisch um eine rechtwinkelig zur Aufstandsfläche 57 verlaufende Behälterachse 154 angeordnet ist.

In Richtung zur Aufstandsfläche 57 weist der Lagerbehälter 152 einen Boden 155 auf, welcher kegelförmig in Richtung zur Aufstandsfläche 57 verjüngend ausgebildet ist. In einem von der Aufstandsfläche 57 abgewandten Bereich weist der Lagerbehälter 152 einen Behälterflansch 156 auf, welcher eine den Zylindermantel 153 entgegengesetzt zur Behälterachse 154 begrenzende, konzentrisch um die Behälterachse 154 umlaufende Mantelfläche 157 entgegengesetzt zur Behälterachse 154 überragt. Der Zylindermantel 153 und der Boden 155 umgrenzen einen Innenraum 158, in dem ein Rührwerk 159 angeordnet ist. Weiters besitzt der Lagerbehälter 152 Fußelemente 160, welche durch mit der Mantelfläche 157 bewegungsfest verbundene Profile 161 und Fußplatten 162 gebildet sind, die mit der Aufstandsfläche 57 bewegungsfest und bevorzugt lösbar verbunden sind. Im Bereich des Behälterflansches 156 weist der Lagerbehälter 152 Verstärkungselemente 163 auf, welche in einer parallel zur Aufstandsfläche 57 verlaufenden, gemeinsamen Ebene mit einer Stirnfläche 164 des Behälterflansches 156 liegen.

Das Rührwerk 159 besteht aus einer rechtwinkelig zur Aufstandsfläche 57 erstreckenden Welle 165, welche einen kreisförmigen Querschnitt besitzt. Außen an der Welle 165 sind vorzugsweise aus Profilelementen gebildete Mitnehmerstäbe 166 angeordnet, vorzugsweise mit der Welle 165 verschweißt. In einem entgegengesetzten Bereich zum Boden 155 besitzt die Welle 165 einen mit dieser bewegungsfest und bevorzugt lösbar verbundenen Wellenzapfen 167, welcher zwei von einem Bund 168 in entgegengesetzter Richtung erstreckende Zapfen 169 besitzt. Ein Zapfen 169, welcher in Richtung zur Aufstandsfläche 57 ragt, wird von der Welle 165 umgrenzt und ist, wie bereits gesagt, bewegungsfest und bevorzugt lösbar mit dieser verbunden. Der Bund 168 verläuft in einer parallel zur Aufstandsfläche 57 liegenden Ebene und weist eine der Aufstandsfläche 57 zugewandte, parallel zu dieser verlaufende Lagerfläche 170 auf, welche ringförmig, konzentrisch um die Behälterachse 154 verläuft.

Der vom Bund 168 sich entgegengesetzt zur Aufstandsfläche 57 erstreckende Zapfen 169 ragt in einen Rührantrieb 171, welcher insbesondere als Elektromotor oder Hydromotor ausgebildet ist, und der mit einem scheibenförmigen, parallel zur Aufstandsfläche 57 verlaufenden Deckel 172 vorzugsweise über eine Befestigungskonsole 173 verbunden ist. Der Deckel 172 liegt auf der Stirnfläche 164 des Behälterflansches 156 auf und ist am Behälterflansch 156 vorzugsweise lösbar angeordnet. Die Verstärkungselemente 163 dienen dabei als Stütze für den Deckel 172. In oder am Deckel 172 angeordnet, befindet sich vorzugsweise ein Radiallager 174, auf dem die Lagerfläche 170 des Wellenzapfens 167 aufliegt und wodurch das Radiallager 174 somit zwischen dem Bund 168 des Wellenzapfens 167 und dem Deckel 172 angeordnet ist. Auf einer parallel zur Aufstandsfläche 57 und abgewandt zu dieser verlaufenden Deckeloberseite 175 angeordnet, befinden sich beispielsweise ein Entlüftungsstutzen 176 und eine Heizvorrichtung 37, welche beispielsweise als Heizgebläse 177 ausgebildet ist. Im Zylindermantel 153 ist überdies eine Behälteröffnung 178 angeordnet, welche der Beschickung des Lagerbehälters 152 mit Materialsträngen 2 dient. Schließlich weist der Lagerbehälter 152, insbesondere in einem der Aufstandsfläche 57 nächstgelegenen Bereich des Bodens 155, eine Entwässerungsöffnung 179 auf.

Am Zylindermantel 153 ist ein Anschlußstutzen 180 angeordnet, welcher eine Behälteröffnung 181 umgrenzt und an dem ein beispielsweise rohrförmiges Fördergehäuse 182 der Fördereinrichtung 104 mittels Flansche 183 so angeordnet ist, daß eine vom Fördergehäuse 182 umgrenzte Aufnahmeöffnung 184 der Fördereinrichtung 104 mit der Behälteröffnung 181 korrespondiert. Das Fördergehäuse 182 ist, wie bereits beschrieben, rohrförmig ausgebildet und weist eine Förderachse 185 auf, um welche der Querschnitt des Fördergehäuses 182 konzentrisch angeordnet ist. Das Fördergehäuse 182 weist eine Außenfläche 36 auf, an der eine oder mehrere Heizvorrichtungen 37, beispielsweise Heizbänder 38, angeordnet sein können. Weiters besitzt die Fördereinrichtung 104 ein Fördermittel 186, welches vom Fördergehäuse 182 umgrenzt wird und das beispielsweise als kernlose Spiralschnecke 187 ausgebildet ist. Diese wird durch einen Förderantrieb 188 in Drehbewegung gesetzt, der insbesondere als Elektromotor oder Hydromotor ausgebildet ist. Der Förderantrieb 188 ist dabei vorzugsweise in einem der Aufnahmeöffnung 184 abgewandten Endbereich 189 des Fördergehäuse 182 angeordnet.

Im Endbereich 189 des Fördergehäuses 182, in dem auch der Förderantrieb 188 angeordnet ist, weist das Fördergehäuse 182 eine Austrittsöffnung 190 auf, welche von einem Austrittsstutzen 191 umgrenzt wird, der mit einem Abwurfschacht 102 verbunden ist, welcher wiederum mit der Preßeinrichtung 1 verbunden ist. Die Preßeinrichtung 1 ist entsprechend den vorher beschriebenen Figuren ausgebildet.

Anhand der Anlage 150 soll nun auch das Verfahren zum Verdichten der Materialstränge 2, insbesondere der Späne 3 aus Al, Mg oder aus Legierungen mit Fe, Al, Mg, beschrieben werden.

Die Späne 3 werden vorzugsweise in aufgelockertem Zustand in einen Bereich, insbesondere in Lagerbehältern 152, gelagert und über die Fördereinrichtung 104 in einen anderen Bereich gefördert, worauf die Verdichtung erfolgt. Während der Förderung werden die Späne 3, beispielsweise bereits im Lagerbehälter 152 oder in der Fördereinrichtung 104, erwärmt und vorgetrocknet. Die Verdichtung erfolgt in der Preßeinrichtung 1 stufenweise, wobei bei der ersten Verdichtungsstufe, d.h. im Vorpreßwerkzeug 48, in der ebenfalls eine Erwärmung stattfinden kann, die Späne 3 mit einem Vordruck beaufschlagt werden und in die zweite Verdichtungsstufe, d.h. in das Hauptpreßwerkzeug 47, gebracht werden. In dieser zweiten Verdichtungsstufe werden die Späne 3 mit einem Hauptdruck beaufschlagt, wodurch unter der zusätzlichen Wärmeeinwirkung eine homogene Verbindung durch eine Plastifizierung der Späne 3 eintritt und der gebildete Materialstrang 2 im Anschluß an die Plastifizierung mittels der in Fig. 1 dargestellten Zerkleinerungsvorrichtung 39 zertrennt wird. Die Vorpreßkraft beträgt ca. 20 kN bis 100 kN und die Hauptpreßkraft 490 kN bis 1480 kN. Die zweite Verdichtungsstufe erfolgt insbesondere dann, wenn die erste Verdichtungsstufe im Kompressionszustand ist, d.h., wenn sich der Vorpreßstempel 93 in seiner in strichlierten Linien dargestellten, dem Hauptpreßwerkzeug 47 nächstgelegenen Position befindet.

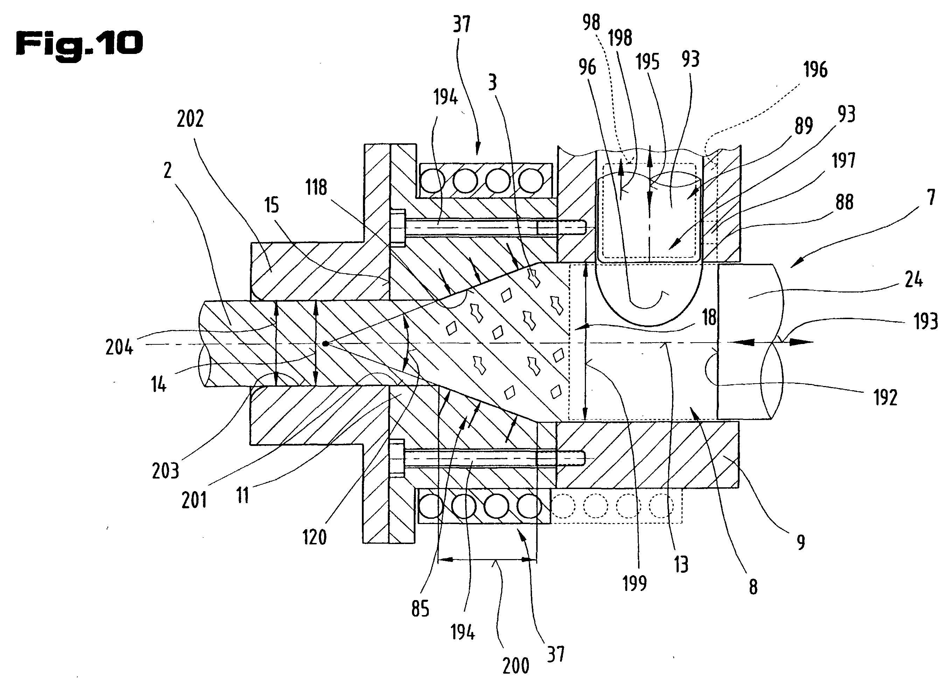

In der Fig. 10 ist das Werkzeuggehäuse 9 mit dem Formhohlraum 8 und dem einer Stirnfläche 192 des Preßelementes 7, z.B. des Hauptpreßstempels 24, gegenüberliegend in der Preßmatrize 11 angeordneten Kompressionskanal 18 dargestellt. Im Formhohlraum 8 ist der Hauptpreßstempel 24 - gemäß einem Doppelpfeil 193 - in Richtung der Längsmittelachse 13 verstellbar gelagert und über eine bereits vorhergehend beschriebene Antriebsvorrichtung 6 betätigbar. Am Werkzeuggehäuse 9 ist die Preßmatrize 11 bevorzugt über Schrauben 194 befestigt, die den in etwa konzentrisch zur Längsmittelachse 13 und den Kompressionskanal 18 ausbildenden Konusabschnitt 85 aufweist. Durch die zweiteilige Ausbildung des Werkzeuggehäuses 9 und der Preßmatrize 11 wird eine Trennung unterschiedlich belasteter Bauteile erreicht und ein kostengünstiger Austausch der einem höheren Verschleiß unterliegenden Preßmatrize 11 ermöglicht. Wie weiters dargestellt, ist die Preßmatrize 11 und damit den Kompressionskanal 18 umfassend die Heizvorrichtung 37 angeordnet, wie es selbstverständlich auch möglich ist, diese Heizvorrichtung 37 dermaßen auszubilden, daß auch das den Formhohlraum 8 ausbildende Werkzeuggehäuse 9 von außen beheizt wird, wie dies in strichlierten Linien dargestellt ist.

In etwa in einem rechten Winkel zur Längsmittelachse 13 mündet über die Eingangsöffnung 98 der Vorpreßhohlraum 89 in das Werkzeuggehäuse 9, in dem der Vorpreßstempel 93 - gemäß einem Doppelpfeil 195 - über eine weitere Antriebsvorrichtung 6, wie bereits beschrieben, verstellbar gelagert ist. Der Formhohlraum 8 und der Vorpreßhohlraum 89 weisen einen zylindrischen Querschnitt gleicher Größe auf. Die dem Formhohlraum 8 zugewandte Druckfläche 96 des Vorpreßstempels 93 ist halbrund und dem Querschnitt des Formhohlraumes 8 angepaßt ausgebildet und der Vorpreßstempel 93 im Vorpreßgehäuse 88 durch z.B. in eine in Längsrichtung verlaufende Führungsnut 196 eingreifende Feder 197 verdrehgesichert geführt.

Zur Herstellung des homogenen Materialstranges 2 aus den Spänen 3 erfolgt der Ablauf im Bereich des Formhohlraumes 8 und des Kompressionskanals 18 folgendermaßen. Der Vorpreßstempel 93 wird über die Antriebsvorrichtung in Richtung eines Pfeiles 198 bewegt, bis die in strichlierten Linien eingezeichnete Eingangsöffnung 98 freigegeben wird und die Späne 3 über Schwerkraft den Vorpreßhohlraum 89 auffüllen. Der Hauptpreßstempel 24 befindet sich dabei in der in vollen Linien gezeigten Endstellung, in der der Formhohlraum 8 freigegeben ist. Anschließend wird der Vorpreßstempel 93 in die in vollen Linien gezeigte Einstellung bewegt, in der die Druckfläche 96 durch die konkave Ausbildung die Hüllfläche des Formhohlraumes 8 ausbildet und bei dieser Bewegung ein Vorverdichten der Späne 3 im Formhohlraum 8 erfolgt. Während nunmehr der Vorpreßstempel 93 in dieser Einstellung verharrt, erfolgt eine Bewegung des Hauptpreßstempels 24 in Richtung des Kompressionskanals 18, in dem es durch Druck-und Temperatureinwirkung und infolge der konisch verlaufenden Mantelfläche 118 zum entscheidenden Verdichtungsvorgang der Späne 3, der den homogenen Aufbau des Materialstranges 2 bewirkt, kommt. Je nach Material der Späne 3 ist dabei ein Konuswinkel 120, der sich aus der Differenz eines Durchmessers 199 des Formhohlraumes 8 und des Matrizeninnendurchmessers 14 und einer Länge 200 des Konusabschnittes 85 ergibt, gewählt. In einem konkreten Beispiel, für die Herstellung des Materialstranges 2 aus verdichteten Spänen 3 aus Magnesium, beträgt der Konuswinkel 120° bevorzugt 16°. Die bevorzugte Temperatur zur Erzielung des homogenen Materialstranges 2 beträgt in etwa 300 °C bis 450 °C.

Wie weiters der Fig. 10 zu entnehmen, ist es vorteilhaft, an den Konusabschnitt 85 in der Preßmatrize 11 eine in etwa zylindrische Führungsbohrung 201, die koaxial zur Längsmittelachse 13 verläuft, anzuordnen. Vorteilhaft ist es, wenn sich diese Führungsbohrung 201 ausgehend vom Matrizeninnendurchmesser 14 in Richtung der Durchtrittsfläche 15 geringfügig konisch erweitert. Zur Stabilisierung des aus der Preßmatrize 11 austretenden Materialstranges 2 ist mit der Preßmatrize 11 lösbar verbunden eine Führungshülse 202 mit einer Durchgangsbohrung 203 angeordnet, die geringfügig größer ist als ein Außendurchmesser 204 des Materialstranges 2. Die konische Erweiterung in der Führungsbohrung 201 bewirkt bei entsprechender Führung des Materialstranges 2 eine Verringerung der Reibungskräfte und in der an die Preßmatrize 11 anschließende Führungshülse 202 erfolgt bereits eine Abkühlung des Materialstranges 2.

Selbstverständlich ist es möglich, einzelne der in den Figuren dargestellten Ausführungsdetails unterschiedlich zu den dargestellten Ausführungen miteinander zu kombinieren.

Darüberhinaus können Ausführungsdetails oder deren Kombinationen auch den Gegenstand eigenständiger Erfindungen darstellen.

Abschließend sei darauf hingewiesen, daß die in den Figuren dargestellten Ausführungsbeispiele unmaßstäblich dargestellt wurden.

### Bezugszeichenaufstellung

- 1: Preßeinrichtung
- 2: Materialstrang
- 3: Span
- 4: Preßvorrichtung
- 5: Preßwerkzeug

- 6: Antriebsvorrichtung
- 7: Preßelement
- 8: Formhohlraum
- 9: Werkzeuggehäuse
- 10: Hauptpreßgehäuse

- 11: Preßmatrize
- 12: Matrizenöffnung
- 13: Längsmittelachse
- 14: Matrizeninnendurchmesser
- 15: Durchtrittsfläche

- 16: Querschnittsfläche
- 17: Hauptpreßhohlraum
- 18: Kompressionskanal
- 19: Gehäuseabschnitt
- 20: Flansch

- 21: Flanschstirnfläche
- 22: Hydraulikzylinder
- 23: Zylinderstange
- 24: Hauptpreßstempel
- 25: Hauptpreßmatrize

- 26: Matrizenaußendurchmesser
- 27: Flanschaußendurchmesser
- 28: Eintrittsöffnung
- 29: Öffnungsachse
- 30: Eintrittskanal

- 31: Eintrittsstutzen
- 32: Eintrittsdurchmesser
- 33: Stutzenflansch
- 34: Stutzenstirnfläche
- 35: Stempeldurchmesser

- 36: Außenfläche
- 37: Heizvorrichtung
- 38: Heizband
- 39: Zerkleinerungsvorrichtung
- 40: Auflaufelement

- 41: Führungssteg
- 42: Führungsleiste
- 43: Verstellvorrichtung
- 44: Gestell
- 45: Profilelement

- 46: Auflageplatte
- 47: Hauptpreßwerkzeug
- 48: Vorpreßwerkzeug
- 49: Gleitfläche
- 50: Frontfläche

- 51: Pfeil
- 52: Schnittlinie
- 53: Längsmittelebene
- 54: Abstand
- 55: Vertikalprofil

- 56: Fußplatte
- 57: Aufstandsfläche
- 58: Abstand
- 59: Verbindungsprofil
- 60: Horizontalprofil

- 61: Oberseite
- 62: Gestellhöhe
- 63: Plattendicke
- 64: Auflageebene
- 65: Konsole

- 66: Konsolenplatte
- 67: Spindelmutter
- 68: Innengewinde
- 69: Spindelachse
- 70: Versteifungsplatte

- 71: Plattenstirnfläche
- 72: Leistenoberfläche
- 73: Spindel
- 74: Antriebselement
- 75: Handrad

- 76: Endbereich
- 77: Lagervorrichtung
- 78: Führungskonsole
- 79: Querplatte
- 80: Innenseite

- 81: Versteifungsrippe
- 82: Platte
- 83: Durchbruch
- 84: Preßling
- 85: Konusabschnitt

- 86: Zylinderabschnitt
- 87: Fußkonsole
- 88: Vorpreßgehäuse
- 89: Vorpreßhohlraum
- 90: Mittelachse

- 91: Flansch
- 92: Hydraulikzylinder
- 93: Vorpreßstempel
- 94: Zylinderdurchmesser
- 95: Querschnittsdurchmesser

- 96: Druckfläche
- 97: Radius
- 98: Eingangsöffnung
- 99: Bohrungsachse
- 100: Eingangsstutzen

- 101: Eingangsflansch
- 102: Abwurfschacht
- 103: Auswurföffnung
- 104: Fördereinrichtung
- 105: Fußkonsole

- 106: Energieversorgungseinrichtung
- 107: Hydraulikaggregat
- 108: Leitung
- 109: Steuerungseinrichtung
- 110: Schaltglied

- 111: Hydraulikventil
- 112: Abtransporteinrichtung
- 113: Seitenfläche
- 114: Breite
- 115: Oberfläche

- 116: Stirnseitenfläche
- 117: Führungsfläche
- 118: Mantelfläche
- 119: Tangentenlinie
- 120: Konuswinkel

- 121: Fördergehäuse
- 122: Abwurfstutzen
- 123: Vorpreßmatrize
- 124: Zylindermantelfläche
- 125: Manteldurchmesser

- 126: Bund
- 127: Bunddurchmesser
- 128: Stutzeninnenfläche
- 129: Einformung
- 130: Bundfläche

- 131: Ringfläche
- 132: Tiefe
- 133: Bundbreite
- 134: Bundstirnfläche
- 135: Flanschstirnfläche

- 136: Matrizenöffnung
- 137: Zylinderabschnitt
- 138: Konusabschnitt
- 139: Schrägkanal
- 140: Kanalachse

- 141: Abschnittsdurchmesser
- 142: Matrizeninnendurchmesser
- 143: Kanaldurchmesser
- 144: Innendurchmesser
- 145: Schnecke

- 146: Außendurchmesser
- 147: Schneckenachse
- 148: Kupplungs - und/oder Lagervorrichtung
- 149: Stirnradgetriebemotor
- 150: Anlage

- 151: Lagereinrichtung
- 152: Lagerbehälter
- 153: Zylindermantel
- 154: Behälterachse
- 155: Boden

- 156: Behälterflansch
- 157: Mantelfläche
- 158: Innenraum
- 159: Rührwerk
- 160: Fußelement

- 161: Profil
- 162: Fußplatte
- 163: Veritärkungselement
- 164: Stirnfläche
- 165: Welle

- 166: Mitnehmerstab
- 167: Wellenzapfen
- 168: Bund
- 169: Zapfen
- 170: Lagerfläche

- 171: Rührantrieb
- 172: Deckel
- 173: Befestigungskonsole
- 174: Radiallager
- 175: Deckeloberseite

- 176: Entlüftungsstutzen
- 177: Heizgebläse
- 178: Behäkeröffnune
- 179: Entwässerungsöffnung
- 180: Anschlußstutzen

- 181: Behälteröffnung
- 182: Fördergehäuse
- 183: Flansch
- 184: Aufnahmeöffnung
- 185: Förderachse

- 186: Fördermittel
- 187: Spiralschnecke
- 188: Förderantrieb
- 189: Endbereich
- 190: Austrittsöffnung

- 191: Austrittsstutzen
- 192: Stirnfläche
- 193: Doppelpfeil
- 194: Schraube
- 195: Doppelpfeil

- 196: Führungsnut
- 197: Feder
- 198: Pfeil
- 199: Durchmesser
- 200: Länge

- 201: Führungsbohrung
- 202: Führunishülse
- 203: Durchgangsbohrung
- 204: Außendurchmesser

## Patentansprüche

1. Preßeinrichtung (1) zur Verdichtung von Metallteilen, insbesondere von Spänen (3), beispielsweise aus Fe, Cu, Mg oder aus Legierungen dieser Elemente oder anderer niedrig schmelzender Metalle oder deren Legierungen zu homogenen Preßlingen mit zumindest einer Preßvorrichtung (4) mit einem, durch ein Werkzeuggehäuse (9) gebildeten Preßwerkzeug (5), das einen Formhohlraum (8) ausbildet und eine Führungsanordnung für ein über eine Antriebsvorrichtung (6) verstellbares Preßelement (7) aufweist, und mit einer Eintrittsöffnung (28) für die Späne (3) im Werkzeuggehäuse (9), dadurch gekennzeichnet, daß einer dem Formhohlraum (8) zugewandten Stirnfläche des Preßelementes (7) gegenüberliegend an den Formhohlraum (8) angrenzend eine einen konisch verjüngend verlaufenden Kompressionskanal (18) ausbildende Preßmatrize (11) mit einer eine Durchtrittsfläche (15) für einen Materialstrang (2) ausbildende Matrizenöffnung (12) angeordnet ist und die Durchtrittsfläche (15) geringer ist als eine Querschnittsfläche (16) des Formhohlraumes (8).

2. Preßeinrichtung nach Anspruch 1, dadurch gekennzeichnet, daß die Durchtrittsfläche (15) zwischen 20 % und 80 %, bevorzugt zwischen 40 % und 60 % der Querschnittsfläche (16) des Formhohlraumes (8) beträgt.

3. Preßeinrichtung nach Anspruch 1 oder 2, dadurch gekennzeichnet, daß eine Länge des Kompressionskanals (18) zwischen 20 mm und 80 mm, bevorzugt 40 mm bis 60 mm, beträgt.

4. Preßeinrichtung nach einem oder mehreren der vorhergehenden Ansprüche, dadurch gekennzeichnet, daß ein Preßwerkzeug (5) als Vorpreßwerkzeug (48) und ein weiteres Preßwerkzeug (5) als Hauptpreßwerkzeug (47) ausgebildet ist.

5. Preßeinrichtung nach einem oder mehreren der vorhergehenden Ansprüche, dadurch gekennzeichnet, daß das Vorpreßwerkzeug (48) einen den Formhohlraum (8) ausbildenden Vorpreßhohlraum (89) aufweist, welcher von einem das Werkzeuggehäuse (9) ausbildenden Vorpreßgehäuse (88) zumindest teilweise umgrenzt wird.

6. Preßeinrichtung nach einem oder mehreren der vorhergehenden Ansprüche, dadurch gekennzeichnet, daß in oder am Vorpreßgehäuse (88) und/oder in oder an einem eine Eintrittsöffnung (28) des Hauptpreßwerkzeuges (47) umgrenzenden Eintrittsstutzen (31) eine die Preßmatrize (11) ausbildende Vorpreßmatrize (123) angeordnet ist.

7. Preßeinrichtung nach einem oder mehreren der vorhergehenden Ansprüche, dadurch gekennzeichnet, daß im Vorpreßhohlraum (89) ein als Preßelement (7) ausgebildeter Vorpreßstempel (93) längs einer Mittelachse (90) des Vorpreßwerkzeuges (48) linear beweglich gelagert ist.

8. Preßeinrichtung nach einem oder mehreren der vorhergehenden Ansprüche, dadurch gekennzeichnet, daß der Vorpreßstempel (93) zylinderförmig ausgebildet ist und einen Zylinderdurchmesser (94) aufweist, welcher in etwa einem Querschnittsdurchmesser (95) einer Querschnittsfläche (16) des Vorpreßhohlraumes (89) entspricht.

9. Preßeinrichtung nach einem oder mehreren der vorhergehenden Ansprüche, dadurch gekennzeichnet, daß der Querschnittsdurchmesser (95) des Vorpreßhohlraumes (89) größer ist als ein Matrizeninnendurchmesser (142) der Vorpreßmatrize (123).

10. Preßeinrichtung nach einem oder mehreren der vorhergehenden Ansprüche, dadurch gekennzeichnet, daß der Vorpreßstempel (93) eine konkav verlaufende Druckfläche (96) aufweist.

11. Preßeinrichtung nach einem oder mehreren der vorhergehenden Ansprüche, dadurch gekennzeichnet, daß der Matrizeninnendurchmesser (142) von 20 mm bis 200 mm, bevorzugt 30 mm bis 80 mm, beträgt.

12. Preßeinrichtung nach einem oder mehreren der vorhergehenden Ansprüche, dadurch gekennzeichnet, daß das Vorpreßgehäuse (88) zumindest eine Eingangsöffnung (98) aufweist, welche eine Bohrungsachse (99) besitzt, die rechtwinkelig zur Mittelachse (90) angeordnet ist.

13. Preßeinrichtung nach einem oder mehreren der vorhergehenden Ansprüche, dadurch gekennzeichnet, daß das Vorpreßgehäuse (88) eine Ablauföffnung aufweist.

14. Preßeinrichtung nach einem oder mehreren der vorhergehenden Ansprüche, dadurch gekennzeichnet, daß an der Eingangsöffnung (98) ein Abwurfschacht (102) einer Fördereinrichtung (104) angeordnet ist.

15. Preßeinrichtung nach einem oder mehreren der vorhergehenden Ansprüche, dadurch gekennzeichnet, daß die Fördereinrichtung (104) beispielsweise als Schneckenförderer, als Spiralschneckenförderer, als Kettenförderer oder als Bandförderer ausgebildet ist.

16. Preßeinrichtung nach einem oder mehreren der vorhergehenden Ansprüche, dadurch gekennzeichnet, daß das Hauptpreßwerkzeug (47) einen den Formhohlraum (8) ausbildenden Hauptpreßhohlraum (17) besitzt, welcher von einem das Werkzeuggehäuse (9) ausbildenden Hauptpreßgehäuse (10) und einer die Preßmatrize (11) ausbildenden Hauptpreßmatrize (25) zumindest teilweise umgrenzt wird.

17. Preßeinrichtung nach einem oder mehreren der vorhergehenden Ansprüche, dadurch gekennzeichnet, daß im Hauptpreßhohlraum (17) ein als Preßelement (7) ausgebildeter Hauptpreßstempel (24) entlang einer Längsmittelachse (13) des Hauptpreßwerkzeuges (47) linear beweglich gelagert ist.

18. Preßeinrichtung nach einem oder mehreren der vorhergehenden Ansprüche, dadurch gekennzeichnet, daß der Hauptpreßstempel (24) zylinderförmig ausgebildet ist und einen Stempeldurchmesser (35) aufweist, welcher in etwa einem Querschnitt der Querschnittsfläche (16) des Hauptpreßhohlraumes (17) entspricht und der größer ist als ein die Matrizenöffnung (12) der Hauptpreßmatrize (25) begrenzender Matrizeninnendurchmesser (14).

19. Preßeinrichtung nach einem oder mehreren der vorhergehenden Ansprüche, dadurch gekennzeichnet, daß die konkav verlaufende Druckfläche (96) des Vorpreßstempels (93) einen Radius (97) aufweist, welcher dem halben Stempeldurchmesser (35) des Hauptpreßstempels (24) und/oder dem halben Querschnitt des Hauptpreßhohlraumes (17) entspricht.

20. Preßeinrichtung nach einem oder mehreren der vorhergehenden Ansprüche, dadurch gekennzeichnet, daß der Matrizeninnendurchmesser (14) von 20 mm bis 200 mm, bevorzugt 30 mm bis 80 mm, beträgt.

21. Preßeinrichtung nach einem oder mehreren der vorhergehenden Ansprüche, dadurch gekennzeichnet, daß konzentrisch zum Matrizeninnendurchmesser (14) an diesen angrenzend eine Führungsbohrung (201) verläuft, die vom Matrizeninnendurchmesser (14) ausgehend konisch erweitert ist.

22. Preßeinrichtung nach einem oder mehreren der vorhergehenden Ansprüche, dadurch gekennzeichnet, daß an die Preßmatrize (11) eine Durchgangsbohrung (203) aufweisende Führungshülse (202) angeordnet ist und ein Querschnitt der Durchgangsbohrung (203) geringfügig größer ist als ein Querschnitt des Materialstranges (2).

23. Preßeinrichtung nach einem oder mehreren der vorhergehenden Ansprüche, dadurch gekennzeichnet, daß das Hauptpreßgehäuse (10) eine Eintrittsöffnung (28) aufweist, welche eine Öffnungsachse (29) besitzt, die rechtwinkelig zur Längsmittelachse (13) verläuft.

24. Preßeinrichtung nach einem oder mehreren der vorhergehenden Ansprüche, dadurch gekennzeichnet, daß das Hauptpreßgehäuse (10) zumindest eine Ablauföffnung aufweist.

25. Preßeinrichtung nach einem oder mehreren der vorhergehenden Ansprüche, dadurch gekennzeichnet, daß an Außenflächen (36) der Fördereinrichtung (104) und/oder des Vorpreßgehäuses (88) und/oder des Hauptpreßgehäuses (10) Heizvorrichtungen (37) angeordnet sind.

26. Preßeinrichtung nach einem oder mehreren der vorhergehenden Ansprüche, dadurch gekennzeichnet, daß die Heizvorrichtung (37) durch ein oder mehrere elektrische Heizbänder (38) gebildet ist und die Heizvorrichtung (37) am Hauptpreßgehäuse (10), insbesondere in einem Gehäuseabschnitt (19) zwischen Hauptpreßmatrize (25) und Eintrittsöffnung (28) angeordnet ist.

27. Preßeinrichtung nach einem oder mehreren der vorhergehenden Ansprüche, dadurch gekennzeichnet, daß von einer die Hauptpreßmatrize (25) des Hauptpreßwerkzeuges (47) entgegengesetzt zur Antriebsvorrichtung (6) begrenzenden Frontfläche (50) in einem Abstand (54) in Hauptpreßrichtung - Pfeil (51) - distanziert eine Zerkleinerungsvorrichtung (39) angeordnet ist.

28. Preßeinrichtung nach einem oder mehreren der vorhergehenden Ansprüche, dadurch gekennzeichnet, daß die Zerkleinerungsvorrichtung (39) eine winkelig zur Hauptpreßrichtung - Pfeil (51) - verlaufende, der Frontfläche (50) zugewandte Gleitfläche (49) aufweist.

29. Preßeinrichtung nach einem oder mehreren der vorhergehenden Ansprüche, dadurch gekennzeichnet, daß die Matrizenöffnung (12) der Hauptpreßmatrize (25) symmetrisch um die Längsmittelachse (13) angeordnet ist.

30. Preßeinrichtung nach einem oder mehreren der vorhergehenden Ansprüche, dadurch gekennzeichnet, daß das Preßelement (7) als Schnecke (145), insbesondere als Konusschnecke mit einer als Kern ausgebildeten Schneckenachse (147), ausgebildet ist.

31. Preßeinrichtung nach einem oder mehreren der vorhergehenden Ansprüche, dadurch gekennzeichnet, daß ein Außendurchmesser (146) der Schnecke (145) in Richtung zur Preßmatrize (11) und/oder zur Eintrittsöffnung (28) abnimmt.

32. Anlage zur Verdichtung von Metallteilen, insbesondere Späne (3) aus Al, Cu, Mg, oder aus Legierungen dieser Elemente oder anderer niedrig schmelzender Metalle oder deren Legierungen mit zumindest einer in einer Lagereinrichtung (151) angeordneten Fördereinrichtung (104) für die Späne (3), welche mit einer Preßeinrichtung (1) verbunden ist, die eine oder mehrere Preßvorrichtungen (4) umfaßt, welche Preßwerkzeuge (5) und relativ zu diesen über Antriebsvorrichtungen (6) verstellbare Preßelemente (7) aufweisen, dadurch gekennzeichnet, daß die Preßwerkzeuge (5) vorzugsweise zylindrische Hohlräume (8) aufweisen, welche von Werkzeuggehäusen (9) zumindest teilweise umgrenzt werden und eine Bohrungsachse (99) eines einen Vorpreßstempel (93) aufnehmenden Vorpreßgehäuses (88) rechtwinkelig zu einer Mittelachse (90) eines Hauptpreßwerkzeuges (47) angeordnet ist und zumindest ein Werkzeuggehäuse (9) eine entgegengesetzt zur Antriebsvorrichtung (6) angeordnete Preßmatrize (11) aufweist, welche eine Matrizenöffnung (12) besitzt, deren Durchtrittsfläche (15) geringer ist als eine Querschnittsfläche (16) des Formhohlraumes (8).

33. Anlage nach Anspruch 32, dadurch gekennzeichnet, daß die Preßeinrichtung (1) nach einem oder mehreren der Ansprüche 2 bis 31 ausgebildet ist.

34. Anlage nach Anspruch 32 und/oder 33, dadurch gekennzeichnet, daß die Lagereinrichtung (151) aus einem Lagerbehälter (152) und einem in diesem drehbeweglich angeordneten, mittels einem Rührantrieb (171) betätigten Rührwerk (159) besteht.

35. Anlage nach einem oder mehreren der vorhergehenden Ansprüche, dadurch gekennzeichnet, daß der Rührantrieb (171) einen Motor, insbesondere einen Elektromotor und einen Hydromotor, aufweist.

36. Anlage nach einem oder mehreren der vorhergehenden Ansprüche, dadurch gekennzeichnet, daß das Rührwerk (159) spiral-, schnecken- oder sternförmig ausgebildet ist.

37. Anlage nach einem oder mehreren der vorhergehenden Ansprüche, dadurch gekennzeichnet, daß der Lagerbehälter (152) eine Behälteröffnung (181) aufweist, welche beispielsweise unter zwischenliegender Anordnung eines Absperrorgans mit einer Aufnahmeöffnung (184) der Fördereinrichtung (104) verbunden ist.

38. Anlage nach einem oder mehreren der vorhergehenden Ansprüche, dadurch gekennzeichnet, daß die Fördereinrichtung (104) beispielsweise als Schneckenförderer, als Spiralschneckenförderer, als Kettenförderer oder als Bandförderer ausgebildet ist und ein Fördergehäuse (121) aufweist, in dem ein, beispielsweise als Spiralschnecke, ausgebildetes Fördermittel (186) drehbeweglich gelagert ist, welches über einen Förderantrieb (188) angetrieben wird.

39. Anlage nach einem oder mehreren der vorhergehenden Ansprüche, dadurch gekennzeichnet, daß der Förderantrieb (188) einen Motor, insbesondere einen Elektromotor oder einen Hydromotor, aufweist.

40. Anlage nach einem oder mehreren der vorhergehenden Ansprüche, dadurch gekennzeichnet, daß der Motor in einem der Aufnahmeöffnung (184) abgewandten Endbereich am Fördergehäuse (121) angeordnet ist.

41. Anlage nach einem oder mehreren der vorhergehenden Ansprüche, dadurch gekennzeichnet, daß am Fördergehäuse (121) eine vorzugsweise aus einem oder mehreren elektrischen Heizbändern (38) gebildete Heizvorrichtung (37) angeordnet ist.

42. Anlage nach einem oder mehreren der vorhergehenden Ansprüche, dadurch gekennzeichnet, daß im Endbereich des Fördergehäuses (121) ein Abwurfschacht (102) angeordnet ist, welcher mit der Eingangsöffnung (98) des Vorpreßgehäuses (88) oder des Hauptpreßgehäuses (10) verbunden ist.

43. Verfahren zum Verdichten von Metallteilen, insbesondere Spänen, beispielsweise aus A1, Cu, Mg oder aus Legierungen dieser Elemente oder anderer niedrig schmelzender Metalle oder deren Legierungen, bei dem die Späne in vorzugsweise aufgelockertem Zustand in einem Bereich gelagert und in einem anderen Bereich gefördert werden, worauf die Verdichtung erfolgt, dadurch gekennzeichnet, daß die Späne während der Förderung erwärmt und getrocknet werden und die Verdichtung stufenweise erfolgt, wobei in der ersten Verdichtungsstufe, in der ebenfalls eine Erwärmung stattfinden kann, die Späne mit einer Vorpreßkraft von 20 kN bis 100 kN beaufschlagt und in die zweite Verdichtungsstufe, in der ebenfalls eine Erwärmung stattfinden kann, gebracht werden, worauf in der zweiten Verdichtungsstufe die Späne mit einer Hauptpreßkraft von 490 kN bis 1480 kN beaufschlagt werden, wodurch eine homogene Verbindung und eine strangförmige Plastifizierung der Späne eintritt und der gebildete Strang im Anschluß an die Plastifizierung zertrennt und insbesondere abtransportiert wird.

## Claims

1. Pressing device (1) for compressing metal parts, in particular chips (3), for example of Fe, Cu, Mg or alloys of these elements or other metals with low melting points or alloys thereof, into homogeneous pellets, comprising at least one pressing unit (4) with a press tool (5) in the form of a tool housing (9) forming a mould cavity (8) and a guide system for a pressing element (7) displaceable by means of a drive system (6), an inlet orifice (28) for the chips (3) being provided in the tool housing (9), characterised in that an end face of the pressing element (7) facing the mould cavity (8) lying opposite and bordering the mould cavity (8) co-operates with a press die (11) forming a conically tapering compression passage (18) and having a die orifice (12) forming a passage surface (15) for a strand of material (2) and the passage surface (15) is smaller than a cross section surface (16) of the mould cavity (8).

2. Pressing device as claimed in claim 1, characterised in that the passage surface (15) is between 20% and 80%, preferably between 40% and 60% of the cross section surface (16) of the mould cavity (8).

3. Pressing device as claimed in claim 1 or 2, characterised in that a length of the compression passage (18) is between 20 mm and 80 mm, preferably 40 mm to 60mm.

4. Pressing device as claimed in one or more of the preceding claims, characterised in that a press tool (5) is provided as a preliminary press tool (48) and another press tool (5) is the main press tool (47).

5. Pressing device as claimed in one or more of the preceding claims, characterised in that the preliminary press tool (48) has a preliminary compression cavity (89) forming the mould cavity (8), which is at least partially enclosed by a preliminary press housing (88) forming the tool housing (9).

6. Pressing device as claimed in one or more of the preceding claims, characterised in that a pre-press die (123) forming the press die (11) is provided in or on the preliminary press housing (88) and/or in or on an inlet end-piece (31) surrounding the inlet orifice (28) of the main press tool (47).

7. Pressing device as claimed in one or more of the preceding claims, characterised in that a preliminary press stamper (93) forming a pressing element (7) is mounted in the preliminary compression cavity (89) so as to be linearly displaceable along a median axis (90) of the preliminary press tool (48).

8. Pressing device as claimed in one or more of the preceding claims, characterised in that the preliminary press stamper (93) is cylindrical in shape and has a cylinder diameter (94) corresponding more or less to a cross section diameter (95) of a cross section surface (16) of the preliminary compression cavity (89).

9. Pressing device as claimed in one or more of the preceding claims, characterised in that the cross section diameter (95) of the preliminary compression cavity (89) is larger than a die internal diameter (142) of the pre-press die (123).

10. Pressing device as claimed in one or more of the preceding claims, characterised in that the preliminary press stamper (93) has a concave compression surface (96).

11. Pressing device as claimed in one or more of the preceding claims, characterised in that the die internal diameter (142) is from 20 mm to 200 mm, preferably 30 mm to 80 mm.

12. Pressing device as claimed in one or more of the preceding claims, characterised in that the preliminary press housing (88) has at least one inlet orifice (98), the bore axis (99) of which is disposed perpendicular to the median axis (90).

13. Pressing device as claimed in one or more of the preceding claims, characterised in that the preliminary press housing (88) has an outlet orifice.

14. Pressing device as claimed in one or more of the preceding claims, characterised in that a chute (102) at the inlet orifice (98) co-operates with a conveyor device (104).

15. Pressing device as claimed in one or more of the preceding claims, characterised in that the conveyor device (104) is a screw conveyor, a spiral conveyor, a chain conveyor or a belt conveyor.

16. Pressing device as claimed in one or more of the preceding claims, characterised in that the main press tool (47) has a main press cavity (17) forming the mould cavity (8), which is at least partially bounded by a main press housing (10) forming the tool housing (9) and a main press die (25) forming the press die (11).

17. Pressing device as claimed in one or more of the preceding claims, characterised in that a main press stamper (24) forming a pressing element (7) in the main press cavity (17) is mounted so as to be linearly displaceable along a longitudinal median axis (13) of the main press tool (47).

18. Pressing device as claimed in one or more of the preceding claims, characterised in that the main press stamper (24) is cylindrical in shape and has a die diameter (35) which more or less corresponds to a cross section of the cross section surface (16) of the main press cavity (17) and is larger than a die internal diameter (14) bounding the die orifice (12) of the main press die (25).

19. Pressing device as claimed in one or more of the preceding claims, characterised in that the concave compression surface (96) of the preliminary press stamper (93) has a radius (97) which corresponds to half a stamper diameter (35) of the main press stamper (24) and/or half the cross section of the main press cavity (17).

20. Pressing device as claimed in one or more of the preceding claims, characterised in that the die internal diameter (14) is from 20 mm to 200 mm, preferably 30 mm to 80 mm.

21. Pressing device as claimed in one or more of the preceding claims, characterised in that a guide bore (201) runs concentrically with the die internal diameter (14) and adjacent thereto, which widens in a conical arrangement starting from the die internal diameter (14).

22. Pressing device as claimed in one or more of the preceding claims, characterised in that a guide sleeve (202) provided on the press die (11) has a bore (203) and a cross section of the bore (203) is slightly larger than a cross section of the strand of material (2).

23. Pressing device as claimed in one or more of the preceding claims, characterised in that the main press housing (10) has an inlet orifice (28), having an orifice axis (29) perpendicular to the longitudinal median axis (13).

24. Pressing device as claimed in one or more of the preceding claims, characterised in that the main press housing (10) has at least one outlet orifice.

25. Pressing device as claimed in one or more of the preceding claims, characterised in that heating devices (37) are provided on the external surfaces (36) of the conveyor device (104) and/or the preliminary press housing (88) and/or the main press housing (10).

26. Pressing device as claimed in one or more of the preceding claims, characterised in that the heating device (37) is provided as one or more strip heaters (38) and the heating device (37) is arranged on the main press housing (10), in particular in a housing section (19) between the main press die (25) and inlet orifice (28).

27. Pressing device as claimed in one or more of the preceding claims, characterised in that a crusher (39) is provided, spaced at a distance (54) in the main press direction - arrow (51) - from a front face (50) bounding the main press die (25) of the main press tool (47) opposite the drive system (6)

28. Pressing device as claimed in one or more of the preceding claims, characterised in that the crusher (39) has a slip surface (49) facing the front face (50) extending at an angle to the main press direction - arrow (51).

29. Pressing device as claimed in one or more of the preceding claims, characterised in that the die orifice (12) of the main press die (25) is disposed symmetrically about the longitudinal median axis (13).

30. Pressing device as claimed in one or more of the preceding claims, characterised in that the pressing element (7) is provided as a screw (145), in particular as a conical screw with a screw axis (147) as its core.

31. Pressing device as claimed in one or more of the preceding claims, characterised in that an external diameter (146) of the screw (145) decreases in a direction towards the press die (11) and/or towards the inlet orifice (28).

32. A plant for compressing metal parts, in particular chips (3), for example of Al, Cu, Mg or alloys of these elements or other metals with low melting points or alloys thereof, comprising at least one conveyor system (104) for the chips (3) in a storage direction (151), which is connected to a pressing device (1) comprising one or more pressing units (4) which have press tools (5) and pressing elements (7) displaceable relative thereto by means of drive systems (6), characterised in that the press tools (5) have preferably cylindrical cavities (8), which are at least partially enclosed by tool housings (9) and a bore axis (99) of a preliminary press housing (88) receiving a preliminary press stamper (93) is disposed perpendicular to a median axis (90) of a main press tool (47) and at least one tool housing (9) has a press die (11) disposed opposite the drive system (6) which has a die orifice (12) whose passage surface (15) is smaller than a cross section surface (16) of the mould cavity (8).

33. Plant as claimed in claim 32, characterised in that the pressing device (1) is as claimed in one or more of claims 2 to 31.

34. Plant as claimed in claim 32 and/or 33, characterised in that the storage unit (151) consists of a storage container (152) and a mixing system (159) rotatably mounted therein by means of a mixer drive (171).

35. Plant as claimed in one or more of the preceding claims, characterised in that the mixer drive (171) has a motor, in particular an electric motor or a hydraulic motor.

36. Plant as claimed in one or more of the preceding claims, characterised in that the mixing system (159) is of a spiral, screw or star-shaped design.

37. Plant as claimed in one or more of the preceding claims, characterised in that the storage container (152) has a container orifice (181), which is connected to an intake orifice (184) of the conveyor system (104) with a shut-off member disposed in between.

38. Plant as claimed in one or more of the preceding claims, characterised in that the conveyor system (104) is a worm conveyor, a spiral conveyor, a chain conveyor or a belt conveyor and has a conveyor housing (121) in which a conveyor means (186) provided in the form of a spiral conveyor, for example, is rotatably mounted, driven by a conveyor drive (188).

39. Plant as claimed in one or more of the preceding claims, characterised in that the conveyor drive (188) is a motor, in particular an electric motor or a hydraulic motor.

40. Plant as claimed in one or more of the preceding claims, characterised in that the motor is disposed in an end region of the conveyor housing (121) remote from the intake orifice (184).

41. Plant as claimed in one or more of the preceding claims, characterised in that a heating device (37) preferably comprising one or more strip heaters (38) is provided on the conveyor housing (121).

42. Plant as claimed in one or more of the preceding claims, characterised in that a chute (102) is provided in the end region of the conveyor housing (121) which is connected to the inlet orifice (98) of the preliminary press housing (88) or the main press housing (10).

43. Method of pressing metal parts, in particular chips, for example of Al, Cu, Mg or alloys of these elements or other metals with low melting points or alloys thereof, in which the chips are preferably stored loosely in one region and conveyed to another region, after which the compression process is effected, characterised in that the chips are heated and dried as they are conveyed and the compression process is effected in stages, whereby in the first compression stage, during which heating may be applied, the chips are impacted with a preliminary compression force of 20 kN to 100 kN and in the second compression stage, during which heating may also be applied, the chips are impacted with a main compression force of from 490 kN to 1480 kN, producing a homogenous bonding and the chips are plasticized in a strand-shaped arrangement and the resultant strand is broken up after the plasticization stage and in particular fed away.

## Revendications

1. Installation de pressage (1) pour comprimer des parties métalliques, notamment de copeaux (3), par exemple en Fe, Cu, Mg ou en des alliages de ces éléments ou d'autres métaux à bas point de fusion ou des alliages de ceux-ci en des ébauches homogènes avec au moins un dispositif de pressage (4) avec un outil de pressage (5) constitué par un boîtier d'outil (9), qui forme un espace creux de moule (8) et présente un agencement de guidage pour un élément de pressage (7) ajustable par un dispositif d'entraînement (6) et avec une ouverture d'entrée (28) pour les copeaux dans le boîtier d'outil (9), caractérisée en ce qu'une matrice de pressage (11) opposée à une face frontale de l'élément de pressage (7) orientée vers l'espace creux de moule, avoisinant l'espace creux de moule (8), formant un canal de compression (18) rétrécissant d'une manière conique est disposée avec une ouverture de matrice (12) réalisant une face de passage (15) pour un boudin de matériau (2), et en ce que la face de passage (15) est plus petite qu'une face en section transversale (16) de l'espace creux de moule (8).

2. Installation de pressage selon la revendication 1, caractérisée en ce que la face de passage (15) représente entre 20% et 80%, de préférence entre 40 % et 60 % de la face en section transversale (16) de l'espace creux de moule (8).

3. Installation de pressage selon la revendication 1 ou 2, caractérisée en ce qu'une longueur du canal de compression (18) est comprise entre 20mm et 80mm, de préférence entre 40mm et 60mm.

4. Installation de pressage selon l'une ou plusieurs des revendications précédentes, caractérisée en ce qu'un outil de pressage (5) est réalisé comme outil de pré-pressage (48) et un outil de pressage ultérieur (5) comme outil de pressage principal (47).

5. Installation de pressage selon l'une ou plusieurs des revendications précédentes, caractérisée en ce que l'outil de pré-pressage (48) présente un espace creux de pré-pressage (89) constituant l'espace creux de moule (8) qui est délimité au moins partiellement par un boîtier de pré-pressage (88) constituant le boîtier d'outil (9).

6. Installation de pressage selon l'une ou plusieurs des revendications précédentes, caractérisée en ce qu'il est disposé une matrice de pré-pressage (123) réalisant la matrice de pressage (11) dans ou au boîtier de pré-pressage (88) et/ou dans ou à une tubulure d'entrée (31) délimitant l'ouverture d'entrée (28) de l'outil de pressage principal (47).

7. Installation de pressage selon l'une ou plusieurs des revendications précédentes, caractérisée en ce qu'il est disposé dans l'espace creux de pré-pressage (89) un poinçon de pré-pressage (93) réalisé comme élément de pressage (7) d'une manière linéairement mobile le long d'un axe médian (90) de l'outil de pré-pressage.

8. Installation selon l'une ou plusieurs des revendications précédentes, caractérisée en ce que le poinçon de pré-pressage (93) est réalisé en une forme cylindrique et présente un diamètre de cylindre (94) qui correspond approximativement à un diamètre en section transversale (95) d'une face en section transversale (16) de l'espace creux de pré-pressage (89).

9. Installation de pressage selon l'une ou plusieurs des revendications précédentes, caractérisée en ce que le diamètre en section transversale (95) de l'espace creux de pré-pressage (89) est plus grand qu'un diamètre intérieur de matrice (142) de la matrice de pré-pressage (123).

10. Installation de pressage selon l'une ou plusieurs des revendications précédentes, caractérisée en ce que le poinçon de pré-pressage présente une face de pression (96) concave.

11. Installation de pressage selon l'une ou plusieurs des revendications précédentes, caractérisée en ce que le diamètre intérieur de matrice (142) est compris entre 20mm et 200mm, de préférence entre 30mm et 80mm.

12. Installation de pressage selon l'une ou plusieurs des revendications précédentes, caractérisée en ce que le boîtier de pré-pressage (88) présente au moins une ouverture d'entrée (98) qui présente un axe de perçage (99) qui est disposé à angle droit à l'axe médian (90).

13. Installation de pressage selon l'une ou plusieurs des revendications précédentes, caractérisée en ce que le boîtier de pré-pressage (88) présente une ouverture d'écoulement.

14. Installation de pressage selon l'une ou plusieurs des revendications précédentes, caractérisée en ce qu'il est disposé à l'ouverture d'entrée (98) un puits d'éjection (102) d'une installation de convoyage (104).

15. Installation de pressage selon l'une ou plusieurs des revendications précédentes, caractérisée en ce que l'installation de convoyage (104) est réalisée, par exemple, comme convoyeur à vis, comme convoyeur à vis en spirale, comme convoyeur à chaîne ou comme convoyeur à bande.

16. Installation de pressage selon l'une ou plusieurs des revendications précédentes, caractérisée en ce que l'outil de pressage principal (47) possède un espace creux de pressage principal (17) constituant l'espace creux de moule (8) qui est entouré au moins partiellement par un boîtier de pressage principal (10) réalisant le boîtier d'outil (9) et une matrice de pressage principale (25) réalisant la matrice de pressage (11).

17. Installation de pressage selon l'une ou plusieurs des revendications précédentes, caractérisée en ce qu'il est logé dans l'espace creux de pressage principal (17) un poinçon de pressage principal (24) réalisé comme élément de pressage (7) d'une manière linéairement mobile le long d'un axe médian longitudinal (13) de l'outil de pressage principal (47).

18. Installation de pressage selon l'une ou plusieurs des revendications précédentes, caractérisée en ce que le poinçon de pressage principal (24) est réalisé en une forme cylindrique et présente un diamètre de poinçon (35) qui correspond approximativement à une section transversale de la face en section transversale (16) de l'espace creux de pressage principal (17) et qui est plus grand qu'un diamètre intérieur de matrice (14) délimitant l'ouverture de matrice (12) de la matrice de pressage principale (25).

19. Installation de pressage selon l'une ou plusieurs des revendications précédentes, caractérisée en ce que la face de pression concave (96) du poinçon de pré-pressage (93) présente un rayon (97) qui correspond à la moitié du diamètre de poinçon (35) du poinçon de pressage principal (24) et/ou à la moitié de la section transversale de l'espace creux de pressage principal (17).

20. Installation de pressage selon l'une ou plusieurs des revendications précédentes, caractérisée en ce que le diamètre intérieur de matrice (14) est compris entre 20mm et 200mm, de préférence entre 30mm et 80mm.

21. Installation de pressage selon l'une ou plusieurs des revendications précédentes, caractérisée en ce que, d'une manière concentrique au diamètre intérieur de matrice (14), avoisinant celui-ci, s'étend un perçage de guidage (201) qui s'élargit en cône en partant du diamètre intérieur de matrice (14).

22. Installation de pressage selon l'une ou plusieurs des revendications précédentes, caractérisée en ce qu'il est disposé à la matrice de pressage (11) un manchon de guidage (202) présentant un perçage traversant (203), et qu'une section transversale du perçage traversant (203) est légèrement plus grande qu'une section transversale du boudin de matériau (2).

23. Installation de pressage selon l'une ou plusieurs des revendications précédentes, caractérisée en ce que le boîtier de pressage principal (10) présente une ouverture d'entrée (28) qui possède un axe d'ouverture (29) qui s'étend à angle droit à l'axe médian longitudinal (13).

24. Installation de pressage selon l'une ou plusieurs des revendications précédentes, caractérisée en ce que le boîtier de pressage principal (10) présente au moins une ouverture d'écoulement.

25. Installation de pressage selon l'une ou plusieurs des revendications précédentes, caractérisée en ce que sont disposés aux faces extérieures (36) de l'installation de convoyage (104) et/ou du boîtier de pré-pressage (88) et/ou du boîtier de pressage principal (10) des dispositifs de chauffage (37).

26. Installation de pressage selon l'une ou plusieurs des revendications précédentes, caractérisée en ce que le dispositif de chauffage (37) est constitué par un ou plusieurs rubans de chauffe électriques (38) et que le dispositif de chauffage (37) est disposé au boîtier de pressage principal (10), notamment dans un tronçon de boîtier (19) entre la matrice de pressage principale (25) et l'ouverture d'entrée (28).

27. Installation de pressage selon l'une ou plusieurs des revendications précédentes, caractérisée en ce qu'il est disposé un dispositif de fractionnement (39) espacé selon un écart (54) dans la direction de pressage principale - flèche (51) - d'une face frontale (50) délimitant la matrice de pressage principale (25) de l'outil de pressage principal (25) opposée au dispositif d'entraînement (6).

28. Installation de pressage selon l'une ou plusieurs des revendications précédentes, caractérisée en ce que le dispositif de fractionnement (39) présente une face de glissement (49) s'étendant angulairement à la direction de pressage principale - flèche (51) -, orientée vers la face frontale (50).

29. Installation de pressage selon l'une ou plusieurs des revendications précédentes, caractérisée en ce que l'ouverture de matrice (12) de la matrice de pressage principale (25) est disposée symétriquement autour de l'axe médian longitudinal (13).

30. Installation de pressage selon l'une ou plusieurs des revendications précédentes, caractérisée en ce que l'élément de pressage (7) est réalisé comme vis sans fin (145), notamment comme vis conique avec un axe de vis sans fin (147) réalisé comme noyau.

31. Installation de pressage selon l'une ou plusieurs des revendications précédentes, caractérisée en ce qu'un diamètre extérieur (146) de la vis sans fin (145) diminue en direction de la matrice de pressage (11) et/ou de l'ouverture d'entrée (28).

32. Installation pour comprimer des parties métalliques, notamment des copeaux (3) en Al, Cu, Mg ou en des alliages de ces éléments ou d'autres métaux à bas point de fusion ou de leurs alliages avec au moins une installation de convoyage (104) pour les copeaux (3) disposée dans une installation de palier (151), et qui est reliée à une installation de pressage (1) qui comprend un ou plusieurs dispositifs de pressage (4), qui présentent des outils de pressage (5) et des éléments de pressage (7) déplaçables relativement à ceux-ci par des dispositifs d'entraînement (6), caractérisée en ce que les outils de pressage (5) présentent de préférence des espaces creux cylindriques (8) qui sont entourés par des boîtiers d'outil (9) au moins partiellement, et un axe de perçage (99) d'un boîtier de pré-pressage (88) recevant un poinçon de pré-pressage (93) est disposé à angle droit à un axe médian (90) d'un outil de pressage principal (47), et au moins un boîtier d'outil (9) présente une matrice de pressage (11) disposée contrairement au dispositif d'entraînement (6) qui possède une ouverture de matrice (12) dont la face en section transversale (15) est plus petite qu'une face en section transversale (16) de l'espace creux de moule (8).

33. Installation selon la revendication 32, caractérisée en ce que l'installation de pressage (1) est réalisée selon l'une ou plusieurs des revendications 2 à 31.

34. Installation selon la revendication 32 et/ou 33, caractérisée en ce que l'installation de palier (151) est constituée d'un récipient de palier (152) et d'un mécanisme agitateur (159) disposé d'une manière rotative dans celui-ci, actionné au moyen d'une commande d'agitation (171).

35. Installation selon l'une ou plusieurs des revendications précédentes, caractérisée en ce que la commande d'agitation (171) présente un moteur, notamment un moteur électrique et un moteur hydraulique.

36. Installation selon l'une ou plusieurs des revendications précédentes, caractérisée en ce que le mécanisme agitateur (159) est réalisé en spirale, en vis sans fin ou en étoile.

37. Installation selon l'une ou plusieurs des revendications précédentes, caractérisée en ce que le récipient de palier (152) présente une ouverture de récipient (181), qui est reliée à une ouverture de réception (184) de l'installation de convoyage (104), par exemple en intercalant un organe d'arrêt.

38. Installation selon l'une ou plusieurs des revendications précédentes, caractérisée en ce que l'installation de convoyage (104) est réalisée par exemple comme convoyeur à vis sans fin, comme convoyeur à vis sans fin en spirale, comme convoyeur à chaîne ou comme convoyeur à bande et présente un boîtier de convoyage (121) dans lequel est logé d'une manière rotative un moyen de convoyage (186) réalisé par exemple comme vis hélicoïdale, qui est entraîné par une commande de convoyage (188).

39. Installation selon l'une ou plusieurs des revendications précédentes, caractérisée en ce que la commande de convoyage (188) présente un moteur, notamment un moteur électrique ou un moteur hydraulique.

40. Installation selon l'une ou plusieurs des revendications précédentes, caractérisée en ce que le moteur est disposé dans une zone d'extrémité, éloignée de l'ouverture de réception (184), au boîtier de convoyage (121).

41. Installation selon l'une ou plusieurs des revendications précédentes, caractérisée en ce qu'il est disposé au boîtier de convoyage (121) un dispositif de chauffage (37) formé de préférence d'un ou de plusieurs rubans de chauffe électriques (38).

42. Installation selon l'une ou plusieurs des revendications précédentes, caractérisée en ce qu'il est disposé dans la zone d'extrémité du boîtier de convoyage (121) un puits d'éjection (102) qui est relié à l'ouverture d'entrée (98) du boîtier de pré-pressage (88) ou du boîtier de pressage principal (10).

43. Procédé pour comprimer des parties métalliques, notamment des copeaux, par exemple en Al, Cu, Mg ou en des alliages de ces éléments ou d'autres métaux à bas point de fusion ou de leurs alliages, où les copeaux ont logés, de préférence dans un état dispersé, dans une zone et sont convoyés dans une autre zone, à la suite de quoi a lieu la compression, caractérisé en ce que les copeaux sont chauffés et séchés pendant le convoyage et que la compression a lieu par paliers, où dans le premier étage de compression, dans lequel il peut également y avoir un échauffement, les copeaux sont soumis à une force de pré-pressage de 20 kN à 100 kN et sont amenés dans le deuxième étage de compression, dans lequel il peut également y avoir un échauffement, à la suite de quoi, dans le deuxième étage de compression, les copeaux sont soumis à une force de pressage principale de 490kN à 1480kN par quoi se produit une liaison homogène et une plastification en forme de boudin des copeaux, et le boudin formé, à la suite de la plastification, est séparé et notamment transporté au loin.
